(19) Europäisches Patentamt / European Patent Office / Office européen des brevets

(11) EP 4 769 579 A1

(12) **EUROPEAN PATENT APPLICATION**
published in accordance with Art. 153(4) EPC

(43) Date of publication:
**01.07.2026 Bulletin 2026/27**

(21) Application number: **24873033.5**

(22) Date of filing: **27.09.2024**

(51) International Patent Classification (IPC):
***H01M 4/66*** *(2006.01)* ***H01M 4/62*** *(2006.01)*
***H01M 4/13*** *(2010.01)* ***H01M 10/052*** *(2010.01)*
***C08G 61/12*** *(2006.01)* ***H01M 4/02*** *(2006.01)*

(52) Cooperative Patent Classification (CPC):
**C08G 61/12; H01M 4/02; H01M 4/13; H01M 4/62; H01M 4/66; H01M 10/052;** Y02E 60/10

(86) International application number:
**PCT/KR2024/014716**

(87) International publication number:
**WO 2025/071326 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 KR 20230131049**
**27.09.2023 KR 20230131050**

(71) Applicants:
- **LG Chem, Ltd.**
  **Yeongdeungpo-gu**
  **Seoul 07336 (KR)**
- **LG ENERGY SOLUTION, LTD.**
  **Seoul 07335 (KR)**

(72) Inventors:
- **YANG, Hee Myeong**
  **Daejeon 34122 (KR)**
- **KOH, Jong Kwan**
  **Daejeon 34122 (KR)**
- **KANG, Joon Koo**
  **Daejeon 34122 (KR)**
- **SONG, In Taek**
  **Daejeon 34122 (KR)**
- **CHOI, Hyun Ju**
  **Daejeon 34122 (KR)**
- **KIM, Ki Hwan**
  **Daejeon 34122 (KR)**
- **CHO, Woo Hyung**
  **Daejeon 34122 (KR)**
- **KWON, Soon Ho**
  **Daejeon 34122 (KR)**
- **PARK, Sung Bin**
  **Daejeon 34122 (KR)**
- **LEE, Seok Kyeong**
  **Daejeon 34122 (KR)**

(74) Representative: **Plasseraud IP**
**104 Rue de Richelieu**
**CS92104**
**75080 Paris Cedex 02 (FR)**

# (54) CURRENT COLLECTOR

(57) The present specification discloses a current collector. The current collector comprises a polymer layer exhibiting a so-called PTC (Positive Temperature Coefficient) effect. The polymer layer exhibits the PTC effect very precisely responding to a temperature and an external voltage. The polymer layer can quickly switch between a state exhibiting excellent electrical properties such as low resistance and a state exhibiting insulator properties due to increased resistance at a necessary time. The current collector is applied to various electronic/electrical devices, whereby in a normal state, it does not affect driving of the devices, and the like through excellent electrical properties, and in an abnormal state, it is possible to ensure stability through a rapid resistance increase.

EP 4 769 579 A1

[Figure 10]

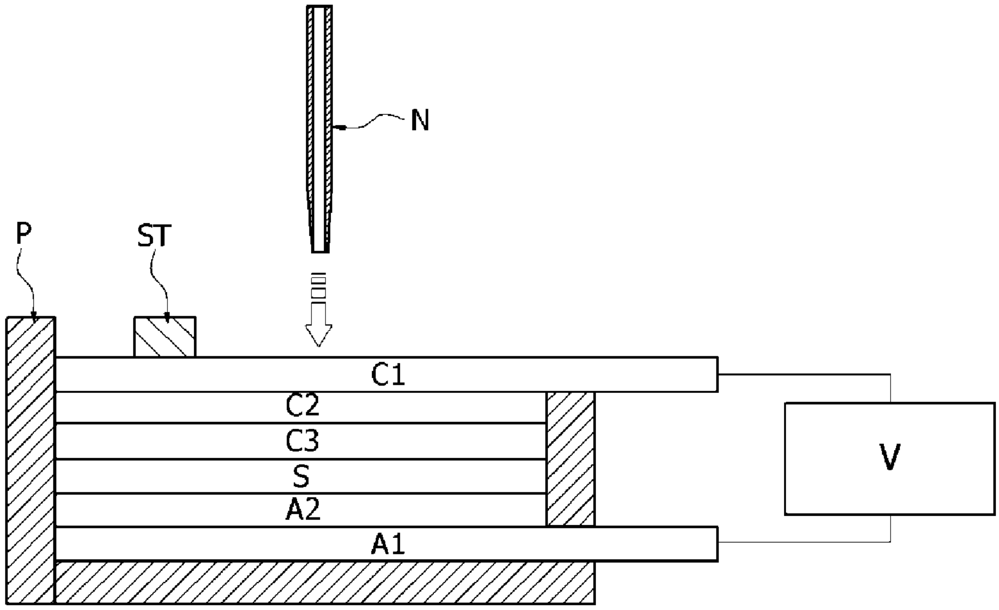

# Description

## Technical Field

This application claims the benefit of priority based on Korean Patent Application Nos. 10-2023-0131049 and 10-2023-0131050, dated September 27, 2023, the disclosures of which are incorporated herein by reference in their entirety.
The present specification discloses a current collector and a use thereof.

## Background Art

Conductive polymers are materials used in various fields.
Conductive polymers change their conductivity depending on doping and de-doping states. Such a characteristic can be applied, for example, to ensuring the stability of electronic/electric devices such as secondary batteries.
For example, application areas of secondary batteries such as lithium secondary batteries are expanded to various fields including electric vehicles (EVs) or renewable energy storage systems, and the like, in addition to portable electronics which have been traditionally applied, and accordingly, many efforts are made to improve storage capacity and output.
However, along with the capacity and output improvement of electronic/electric devices such as secondary batteries, issues regarding stability and potential hazardous properties also increase. For example, although fire resistance of electric vehicles is about 60 times or so lower than that of vehicles with internal combustion engines, it has serious risks of TR (thermal runaway) and TP (thermal propagation), which cause uncontrolled temperature increase and hazardous chemical leakage, and the like.
To prevent these risks, commercialized electric vehicles are equipped with various external safety mechanisms (pressure-limited valves, cell-to-cell fire extinguishers, or high thermal insulating materials, etc.), but these safety mechanisms still do not effectively respond to TR and TP, or show very slow response speeds.

## Contents of the Invention

## Technical Problem

The present specification discloses a current collector. The current collector comprises a polymer layer exhibiting a so-called PTC (Positive Temperature Coefficient) effect. The present specification discloses a content that the PTC effect of the polymer layer can be very precisely controlled in response to a temperature and an external voltage. The present specification discloses a content that the polymer layer can quickly exhibit at a necessary time a transition between a state exhibiting excellent electrical properties such as low resistance and a state exhibiting insulator properties due to the increased resistance.
Therefore, the current collector comprising the polymer layer is applied to various electronic/electric devices, so that in a normal state, it does not affect driving of the devices, and the like through excellent electrical properties, and in an abnormal state, it is possible to ensure stability through the rapid resistance increase. For example, the current collector is applied to a secondary battery to be converted into an insulator in an abnormal state, thereby suppressing additional current flow, whereby it is possible to secure excellent stability against risks caused by TR and TP, and the like.
The present specification also discloses an electrode assembly and a secondary battery, and the like, comprising the current collector.

## Technical Solution

Among physical properties mentioned in this specification, the physical property affected by a temperature is a physical property measured at room temperature, unless otherwise specified.
The term room temperature refers to a natural temperature without artificially warming or cooling, which may be, for example, any temperature within a range of about 10°C to 30°C, for example, a temperature of about 23°C or about 25°C or so.
The unit of temperature mentioned in this specification is Celsius (°C), unless otherwise defined.
Among physical properties mentioned in this specification, the physical property affected by a measurement pressure is a physical property measured at normal pressure, unless otherwise specified.
The term normal pressure is a natural pressure without artificially pressurizing or depressurizing, wherein a pressure within a range of about 700 mmHg to 800 mmHg is usually referred to as the normal pressure.
Among physical properties mentioned in this specification, the physical property affected by measurement

humidity is a physical property measured at standard-state humidity, unless otherwise specified. The standard-state humidity is any relative humidity within a range of 40% to 60% in terms of relative humidity, which means, for example, a relative humidity of 40%, 45%, 50%, 55%, or 60% or so.

In this specification, the term normal state means a normal operating state of an electrical/electronic device such as a secondary battery (for example, a normal charging or discharging state of a secondary battery) and/or a storage state thereof.

In this specification, the term abnormal state means a state where abnormal heat generation, ignition, and/or explosion occurs in an electrical/electronic device such as a secondary battery, or the risk of the abnormal heat generation, ignition, and/or explosion is increased. For example, in a secondary battery, a state where abnormal heat generation, ignition, or explosion occurs due to a short circuit phenomenon or the like, or a dangerous state where the possibility of the heat generation, ignition, or explosion is increased may be the abnormal state.

The present specification discloses a current collector. The current collector may be an electrode current collector, for example, an electrode current collector for a secondary battery.

The current collector may comprise a current collector body and a polymer layer formed on the current collector body. The electrode current collector may be used to form an electrode. For example, the electrode formed using the electrode current collector may comprise the electrode current collector and an active material layer formed on the polymer layer of the current collector. Figure 1 is an exemplary cross-sectional diagram of an electrode current collector comprising a current collector body (100) and a polymer layer (200), and Figure 2 is an exemplary cross-sectional diagram showing an electrode in which an active material layer (300) is formed on the polymer layer (200) of the current collector.

As in the diagrams, in the current collector or electrode, the current collector body (100) and the polymer layer (200), and the polymer layer (200) and the active material layer (300) may also be in contact with each other. In some cases, other elements may also exist between the current collector body (100) and the polymer layer (200) or between the polymer layer (200) and the active material layer (300). In addition, although the diagrams illustrate a case where the active material layer (300) exists only on one side of the current collector body (100), the active material layer (300) may also exist on both sides of the current collector body (100). In this case, the polymer layer (200) may also exist in two layers between each of the active material layers (300) existing on both sides of the current collector body (100) and the current collector body (100), or may also exist in one layer between any one of the active material layers (300) existing on both sides and the current collector body (100).

The polymer layer may be designed to exhibit the so-called PTC (positive temperature coefficient) effect. Such a polymer layer may exhibit a conductivity change according to a change in temperature and/or applied voltage. Therefore, the polymer layer may variably control migration of charges through the electrode according to the temperature.

By applying such a polymer layer, the electrode having the current collector is applied to a secondary battery, or the like, so that it can exhibit excellent electrical characteristics including low resistance in a normal state, and can secure stability through a resistance increase in an abnormal state.

In order that the polymer layer is applied to the electrode to exhibit the effect, the tendency of the PTC effect exhibited by the polymer layer must be controlled.

The polymer layer can suppress, for example, an abnormal flow of charges through a resistance increase in an abnormal state, and as a result, prevent a temperature increase and reduce a temperature increase rate. In addition, the polymer layer can suppress or block an abnormal voltage drop by suppressing abnormal migration of charges in an abnormal state. Accordingly, an electrode and a secondary battery, having excellent performance and secured stability can be obtained through use of a current collector to which the polymer layer is applied.

For example, the polymer layer can suppress abnormal overcurrent through the resistance increase in an abnormal state, thereby preventing a so-called thermal runaway phenomenon (TR (Thermal Runaway) or TP (Thermal Propagation) phenomenon), and can prevent volume expansion due to internal gas generation, thereby reducing the risk of heat generation and explosion.

The polymer layer can control the temperature where the PTC effect occurs, thereby maintaining a stable oxidation potential and electrical characteristics in a normal state.

For example, the polymer layer, or the current collector or electrode comprising the same can have $\Delta T$of Equation 1 below within a certain range.

[Equation 1]

$$\Delta T = (T_2 - T_1) / T_2 \times 100$$

In Equation 1, $T_1$ is the maximum temperature in a needle test for a fully charged mono-cell comprising the polymer layer or the current collector, and $T_2$ is the maximum temperature in a needle test for a reference mono-cell.

The fully charged mono-cell is a mono-cell manufactured by applying the polymer layer or current collector to a positive electrode, which is a mono-cell in a fully charged state. The method for manufacturing such a mono-cell is

described in "5. Needle Test" of this specification.

The reference mono-cell is a mono-cell identical to the fully charged mono-cell, except that it does not include the polymer layer, which is also a mono-cell in a fully charged state. The method for manufacturing such a reference mono-cell is also described in "5. Needle Test" of this specification.

The needle test is a test for checking temperature and voltage, and the like, while passing a needle through the mono-cell, and the method for performing such a test is described in "5. Needle Test" of this specification.

The needle is a needle having a temperature measuring device (e.g., a thermocouple) inserted therein, and the maximum temperature is measured by the temperature measuring device.

The lower limit of the $\Delta T$ may be 15%, 20%, 25%, 26%, 27%, 28%, 29%, 30%, 31%, 32%, 33%, 34%, 35%, 36%, or 38% or so, and the upper limit thereof may be 99%, 90%, 80%, 70%, 60%, 55%, 50%, 45%, or 40% or so. The $\Delta T$ may be within a range of more than or equal to, or more than any lower limit selected from the above-listed lower limits; or within a range of less than, or equal to or less than any upper limit selected from the above-listed upper limits while being more than or equal to, or more than any lower limit selected from the above-listed lower limits. It means that the higher the value of the $\Delta T$, the more efficiently the polymer layer suppresses a temperature rise in an abnormal state.

The lower limit of $T_1$ in Equation 1 is not particularly limited, but may be 10°C, 20°C, 30°C, 40°C, 45°C, or 50°C or so, and the upper limit thereof may be 90°C, 88°C, 86°C, 84°C, 82°C, 80°C, 78°C, 70°C, 68°C, 66°C, 64°C, 62°C, 60°C, or 58°C or so. The $T_1$ may be within a range of less than or equal to, or less than any upper limit selected from the above-listed upper limits; or within a range of less than, or equal to or less than any upper limit selected from the above-listed upper limits while being more than or equal to, or more than any lower limit selected from the above-listed lower limits. It means that the lower the value of the $T_1$, the more efficiently the polymer layer suppresses a temperature rise in an abnormal state.

The polymer layer, or the current collector or electrode applying the same may have S of Equation 2 below in a certain level or less.

[Equation 2]

$$S = (T_1 - T_0)/S_1$$

In Equation 2, $T_1$ is the same as $T_1$ in Equation 1.

In Equation 2, $T_0$ is the temperature (temperature measured by a temperature measuring device inserted into the needle) at the time point (reference time point) when the minimum voltage is confirmed for the mono-cell in the needle test described in Equation 1. This reference time point may represent the time point when a short circuit occurs in the mono-cell. When the voltage of the mono-cell is monitored in the needle test, a voltage drop phenomenon occurs in which the voltage drops due to abnormal migration of charges, and the time point when the minimum voltage is confirmed due to this voltage drop phenomenon becomes the reference time point.

In Equation 2, S1 is the time required from the reference time point (the time point when the temperature $T_0$ is confirmed) to the time point when the temperature $T_1$ is confirmed, and the unit is seconds.

The method of checking S in Equation 2 is also described in the "5. Needle Test" section of Example sections in this specification.

The lower limit of S may be 1, 5, 10, 15, 20, 25, 30, 35, or 40 or so, and the upper limit thereof may be 70, 65, 60, 55, 50, or 45 or so. The S may be within a range of less than or equal to, or less than any upper limit selected from the above-listed upper limits; or within a range of less than, or equal to or less than any upper limit selected from the above-listed upper limits while being more than or equal to, or more than any lower limit selected from the above-listed lower limits. It means that the lower the value of the S, the more efficiently the polymer layer suppresses the temperature rise in an abnormal state, and this suppression effect occurs quickly.

The lower limit of $S_1$ in Equation 2 may be 0.5 seconds, 0.55 seconds, 0.6 seconds, 0.65 seconds, 0.7 seconds, 0.75 seconds, or 0.8 seconds or so, and the upper limit thereof may be 100 seconds, 90 seconds, 80 seconds, 70 seconds, 60 seconds, 50 seconds, 40 seconds, 30 seconds, 20 seconds, 10 seconds, 9 seconds, 8 seconds, 7 seconds, 6 seconds, 5 seconds, 4 seconds, 3 seconds, 2 seconds, 1 second, or 0.8 seconds or so. The S1 may be within a range of more than or equal to, or more than any lower limit selected from the above-listed lower limits; or within a range of less than, or equal to or less than any upper limit selected from the above-listed upper limits while being more than or equal to, or more than any lower limit selected from the above-listed lower limits. It means that the higher the value of the $S_1$, the more efficiently the polymer layer suppresses the temperature rise in an abnormal state.

The reference time point is the time point when in the needle test, a mono-cell in a fully charged state is penetrated by a needle, and then the minimum voltage of the mono-cell is confirmed, and the minimum voltage is the minimum voltage first confirmed in the voltage change occurring in the mono-cell. In other words, the minimum voltage is the minimum voltage at the voltage drop which is first observed in the needle test. If it is the time point when the voltage drop no longer occurs at the first voltage drop or if the voltage drop occurs and then the voltage increases, the voltage immediately before the increase is the minimum voltage. In some cases, the voltage increases after the first voltage drop and then decreases

again, whereby a lower voltage may also be observed compared to the minimum voltage first confirmed, but even in such cases, the minimum voltage that becomes the reference time point is the minimum voltage at the voltage drop first confirmed.

The reference time point may represent the time point when a short circuit occurs in the mono-cell. For example, while the needle penetrates the mono-cell, the short circuit may occur once or more. If the short circuit occurs once or more, the voltage of the mono-cell in the fully charged state may be reduced the most in the first short circuit. In addition, the voltage may be reduced by the short circuit to reach the minimum voltage.

For example, if the short circuit occurs twice or more, the voltage may rapidly decrease in the first short circuit, and then decrease or increase by a small difference as many times as the number of short, where the voltage is reduced the most when the first short circuit occurs, so that the voltage reduced by the first short circuit may be regarded as the minimum voltage. In addition, for example, when the short circuit occurs twice or more, the degree of voltage reduced by the first short circuit may have the greatest influence on the $T_1$.

The time point when the minimum voltage is confirmed at the time point when the voltage is first reduced may be regarded as the time point when the $T_0$ is confirmed.

$T_1$ of Equation 2 is the same as $T_1$ of Equation 1, and $T_0$ of Equation 2 corresponds to the temperature at the reference time point, so that it can be considered the same as the temperature confirmed by the thermocouple at the time point when the short circuit occurs. The $T_0$ increases while the short circuit occurs, whereby it can reach the maximum temperature corresponding to $T_1$ as described above.

For example, for Equation 2, if the temperature change amounts up to the maximum temperature are the same, the longer the time required until the maximum temperature is confirmed, the more stability can be secured in the abnormal state. Also, for example, if the times required until the maximum temperature is confirmed are the same, it can be supported that the lower the maximum temperature and thus the smaller the temperature change amount, the more stability is secured in the abnormal state.

The polymer layer, or the current collector or electrode applying the same may have ΔV of Equation 3 below in a certain level or less.

[Equation 3]

$$\Delta V = (V_1 - V_2)/V_1 \times 100$$

In Equation 3, $V_1$ is the voltage confirmed for the mono-cell in the fully charged state before the needle test.

In Equation 3, $V_2$ is the minimum voltage confirmed by penetrating the needle through the mono-cell in the fully charged state. The $V_2$ may be the voltage at the reference time point.

The method of confirming the ΔV is described in "5. Needle Test" of Example sections in this specification.

If the polymer layer or the current collector applying the same is used, the abnormal flow of charges in an abnormal state such as a short circuit can be blocked or suppressed, and as a result, the voltage decrease can be suppressed.

The lower limit of the ΔV may be, for example, 5%, 15%, 20%, 25%, 30%, 35%, 40%, 45%, 50%, 55%, 60%, 65%, 70%, or 75% or so, and the upper limit thereof may be 87%, 85%, 80%, 75%, 70%, 65%, 60%, or 55% or so. The ΔV may be within a range of less than or equal to, or less than any upper limit selected from the above-listed upper limits; or within a range of less than, or equal to or less than any upper limit selected from the above-listed upper limits while being more than or equal to, or more than any lower limit selected from the above-listed lower limits. It means that the higher the value of the $S_1$, the more efficiently the polymer layer suppresses the temperature rise in an abnormal state.

To satisfy the characteristics, a specific conductive polymer may be introduced into the polymer layer.

If necessary, the polymer layer may further comprise a conductive material. The intended effect may be more efficiently secured by controlling the content, dispersion state, and/or density of such a conductive material.

The thickness of the polymer layer may be appropriately selected according to the purpose. For example, the lower limit of the thickness of the polymer layer may be 50, 100, 150, 200, 250, 300, 350, 400, 450, 500, 550, or 600 or so, and the upper limit thereof may be 2,000, 1,500, 1,000, 900, 800, 700, 600, 500, 400, or 350 or so. The unit of the thickness is nm. The thickness may be within a range of more than or equal to, or more than any lower limit selected from the above-listed lower limits; or within a range of less than, or equal to or less than any upper limit selected from the above-listed upper limits while being more than or equal to, or more than any lower limit selected from the above-listed lower limits.

The thicker the thickness of the polymer layer is within the range, the more efficiently the intended effect can be exerted. Accordingly, in an appropriate example, the lower limit of the thickness of the polymer layer may be close to the value of the examples of the present specification (particularly, Examples 2 and 4).

As the current collector body, one usually used as the current collector body in the positive or negative electrode may be used without any special limitation.

If the current collector body has conductivity without causing chemical changes in applied devices such as

secondary batteries, the type, size, and shape thereof, and the like are not particularly limited. An example of a material that can be used as the current collector body may include copper, aluminum, stainless steel, nickel, titanium, or calcined carbon, and the like, or may be exemplified by a material, and the like in which the surface of copper, aluminum, or stainless steel is surface-treated with carbon, nickel, titanium, or silver, and the like. The current collector body may be in the form of a film, sheet, foil, net, porous body, foam, or nonwoven fabric, and the like, which comprises the above material. In some cases, a known surface treatment may also be performed on the surface of the current collector body to improve adhesive force to other layers such as a polymer layer or an active material layer.

Such a current collector body may typically have a thickness within a range of 3μm to 500 μm, but is not limited thereto.

The polymer layer is present on one or both sides of the current collector body.

The term polymer layer means a layer comprising a polymer. For example, the lower limit of the content of the polymer contained in the polymer layer may be 30 weight%, 35 weight%, 40 weight%, 45 weight%, 50 weight%, 55 weight%, 60 weight%, 65 weight%, 70 weight%, 75 weight%, 80 weight%, 85 weight%, 90 weight%, or 95 weight% or so, and the upper limit thereof may be 100 weight%, 95 weight%, 90 weight%, 85 weight%, 80 weight%, 75 weight%, 70 weight%, 65 weight%, 60 weight%, 55 weight%, or 50 weight% or so. The content is the content of the polymer based on the total weight of the polymer layer. The content may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The polymer layer may not be the so-called active material layer of the electrode. Therefore, the content of the electrode active material in the polymer layer may be controlled. For example, the upper limit of the content of the electrode active material in the polymer layer may be 10 weight%, 9 weight%, 8 weight%, 7 weight%, 6 weight%, 5 weight%, 4 weight%, 3 weight%, 2 weight%, 1 weight%, 0.5 weight%, 0.1 weight%, 0.05 weight%, 0.01 weight%, 0.005 weight%, or 0.001 weight% or so, and the lower limit thereof may be 0 weight%. The content is the content of the electrode active material based on the total weight of the polymer layer. The content may be within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. The specific type of the electrode active material is described below.

The polymer included in the polymer layer may be a conductive polymer. As is well known, a conductive polymer is a polymer that exhibits conductivity through conjugated systems of polymer chains and/or doping, and the like. In one example, the conductive polymer may be a polymer, the conductivity of which changes by doping and de-doping.

The conductive polymer may have a weight average molecular weight in a predetermined range. For example, the lower limit of the weight average molecular weight of the conductive polymer may be 10,000, 15,000, 20,000, 25,000, 30,000, 35,000, 40,000, 45,000, 50,000, 55,000, 60,000, 65,000, 70,000, 75,000, 80,000, 85,000, 90,000, 95,000, 100,000, 105,000, 110,000, 115,000, 120,000, 125,000, 130,000, 135,000, 140,000, 145,000, or 150,000 or so, and the upper limit thereof may also be 1,000,000, 950,000, 900,000, 850,000, 800,000, 750,000, 700,000, 650,000, 600,000, 550,000, 500,000, 450,000, 400,000, 350,000, 300,000, 250,000, 200,000, 150,000, or 110,000 or so. The weight average molecular weight may be within a range of more than or equal to, or more than any lower limit selected from the above-listed lower limits; or within a range of less than, or equal to or less than any upper limit selected from the above-listed upper limits; or within a range of less than, or equal to or less than any upper limit selected from the above-listed upper limits while being more than or equal to, or more than any lower limit selected from the above-listed lower limits. The unit of the weight average molecular weight is g/mol, which is measured by the method described in "2. GPC (Gel Permeation Chromatograph)" of Example sections in this specification.

The molecular weight distribution, i.e., the ratio Mw/Mn of the weight average molecular weight Mw and the number average molecular weight Mn, of the conductive polymer may be within a predetermined range. The lower limit of the molecular weight distribution may be 2, 2.5, 3, 3.5, 4, or 4.5 or so, and the upper limit thereof may be 8, 7.5, 7, 6.5, 6, 5.5, 5, 4.5, 4, or 3.5 or so. The molecular weight distribution may be within a range of more than or equal to, or more than any lower limit selected from the above-listed lower limits; or within a range of less than, or equal to or less than any upper limit selected from the above-listed upper limits; or within a range of less than, or equal to or less than any upper limit selected from the above-listed upper limits while being more than or equal to, or more than any lower limit selected from the above-listed lower limits.

When the conductive polymer has the molecular weight characteristics, the control of the intended PTC effect can be efficiently performed. As described below, the PTC effect by the conductive polymer can be expressed as the de-doping efficiency is adjusted by vibration of a functional group (such as a long-chain hydrocarbon functional group to be described below) contained in the conductive polymer at an increased temperature. The type of vibration of such a functional group varies depending on the carbon number of the functional group, as described below, and varies depending on the size and size distribution of the polymer containing the functional group as well. The weight average molecular weight and molecular weight distribution reflect the size and size distribution, and the like.

The lower and upper limits of the above weight average molecular weight are closer to the weight average molecular weight (about 118,000 g/mol) of the polymer used in the examples of this specification, the more effectively the intended effect can be exerted.

The lower and upper limits of the above molecular weight distribution are closer to the molecular weight distribution (about 4.8) of the polymer used in the examples of this specification, the more effectively the intended effect can be exerted.

The conductive polymer may be polythiophene.

The term polythiophene means a polymer containing a thiophene unit in a certain level or more.

In this specification, the term "unit" of the polymer means a state where a certain monomer is polymerized and included in the polymer, and the thiophene unit means a state where a thiophene monomer is polymerized and included in the polymer.

The thiophene monomer is a monomer of thiophene series, which may be a monomer containing a thiophene skeleton.

The lower limit of the molar ratio of the thiophene unit in the polythiophene may be about 50 mol%, 55 mol%, 60 mol%, 65 mol%, 70 mol%, 75 mol%, 80 mol%, 85 mol%, or 90 mol% or so based on the mole number of all the units included in the polythiophene, and the upper limit thereof may be 100 mol%, 95 mol%, or 90 mol% or so. The ratio of the thiophene unit may be within a range of more than or equal to, or more than any lower limit selected from the above-listed lower limits; or within a range of less than, or equal to or less than any upper limit selected from the above-listed upper limits while being more than or equal to, or more than any lower limit selected from the above-listed lower limits.

The conductive polymer may contain a unit having a long-chain hydrocarbon functional group (hereinafter, may be referred to as unit A). The conductive polymer may be polythiophene. In this case, the monomer having the long-chain hydrocarbon functional group may be a thiophene monomer.

In this specification, the term long-chain hydrocarbon functional group means a monovalent hydrocarbon group having a carbon number in a certain level or more or a monovalent functional group containing the monovalent hydrocarbon group.

For example, the lower limit of the carbon number present in the long-chain hydrocarbon functional group (i.e., the carbon number of the monovalent hydrocarbon group) may be 4, 5, 6, 7, 8, 9, 10, 11, or 12 or so, and the upper limit thereof may be 30, 29, 28, 27, 26, 25, 24, 23, 22, 21, 20, 19, 18, 17, 16, 15, 14, 13, 12, 11, 10, 9, 8, 7, 6, 5, or 4 or so. The carbon number may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The carbon number may be the total carbon number present in the long-chain hydrocarbon functional group, or the carbon number of a hydrocarbon chain having a linear structure included in the functional group. That is, the monovalent hydrocarbon group present in the long-chain hydrocarbon functional group may have a linear structure or a branched structure, where even in the case of the branched structure, the carbon number constituting the longest linear chain in the relevant branched structure may be within the above range. For example, if the branched structure is a 2-ethylhexyl group, the carbon number constituting the longest linear chain is 6.

An example of the long-chain hydrocarbon functional group may be exemplified by one or more selected from the group consisting of an alkyl group, an alkenyl group, an alkynyl group, an alkoxy group, an alkylcarbonyl group, and an alkylcarbonyloxy. In a suitable example, the long-chain hydrocarbon functional group may be an alkyl group and/or an alkoxy group.

The carbon number present in the alkyl group, alkenyl group, alkynyl group, the alkoxy group, the alkyl group of the alkylcarbonyl group, and the alkyl group of the alkylcarbonyloxy group may be within the range of the carbon number present in the long-chain hydrocarbon functional group (i.e., the carbon number of the monovalent hydrocarbon group).

For example, the alkyl group, alkenyl group, alkynyl group, the alkoxy group, the alkyl group of the alkylcarbonyl group, and the alkyl group of the alkylcarbonyloxy group may be a linear or branched structure, and in the case of the branched chain, the carbon number forming the longest linear chain in the relevant branched structure may be within the range.

The alkyl group, alkenyl group, alkynyl group, alkoxy group, alkylcarbonyl group, or alkylcarbonyloxy, which is a long-chain hydrocarbon functional group, may also be optionally substituted with one or more substituents.

Such a long-chain hydrocarbon functional group is a functional group capable of imparting appropriate mobility to the monomer during the polymerization process of the conductive polymer or the conductive polymer itself. The monomer containing such a long-chain hydrocarbon functional group imparts appropriate mobility to a monomer mixture, and diffuses within the monomer mixture to enable polymerization to occur with excellent efficiency. Also, the conductive polymer having the long-chain hydrocarbon functional group can enable a polymer layer to be formed stably and uniformly between the current collector and the active material layer through appropriate mobility.

The long-chain hydrocarbon functional group is appropriately oriented during the drying or annealing process applied in the process of forming the polymer layer, whereby it can also enable securing the intended PTC effect. The long-chain hydrocarbon functional group expresses enhanced vibrational energy at an increased temperature, whereby the efficiency of de-doping of anions bound to the polymer can be adjusted. This de-doping induces an increase in resistance. The de-doping efficiency can be controlled by the length and/or amount of the long-chain hydrocarbon functional group. For example, under the same temperature, the vibrational energy of a relatively long chain is more than the vibrational energy of a relatively short chain, and accordingly, the intended PTC effect can be set through control of the type, length, and/or ratio of the long-chain hydrocarbon functional group.

For example, to appropriately implement the effect, the ratio ($100\times M_A/M$) of the mole number ($M_A$) of the monomer unit (unit A) having the long-chain hydrocarbon functional group to the mole number (M) of all monomer units of the conductive polymer may be adjusted. For example, the lower limit of the molar ratio may be 50 mol%, 55 mol%, 60 mol%, 65 mol%, 70 mol%, 75 mol%, 80 mol%, 85 mol%, 90 mol%, or 95 mol% or so, and the upper limit thereof may be 99 mol%, 98 mol%, 96 mol%, 95 mol%, 94 mol%, 92 mol%, or 90 mol% or so. The ratio may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the lower and upper limits of the ratio ($100\times M_A/M$) are each to the value (about 90 mol%) presented in Examples of this specification, the more effectively the intended effect can be exerted.

The conductive polymer may contain first and second hydrocarbon functional groups having different carbon numbers as the long-chain hydrocarbon functional group.

Therefore, the conductive polymer may contain a unit having the first hydrocarbon functional group and a unit having the second hydrocarbon functional group.

The first hydrocarbon functional group is a functional group having a relatively large carbon number among the long-chain hydrocarbon functional groups. The lower limit of the carbon number of the first hydrocarbon functional group may be 10, 11, or 12 or so, and the upper limit thereof may be 20, 19, 18, 17, 16, 15, 14, 13, 12, 11, or 10 or so. The carbon number of the first hydrocarbon functional group may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the lower limit of the carbon number of the first hydrocarbon functional group is to the value (12) presented in Examples of this specification, the more effectively the intended effect can be exerted.

Such a first hydrocarbon functional group exhibits enhanced vibrational energy at an increased temperature, whereby it is possible to control the de-doping efficiency of the conductive polymer. The start temperature (onset point) of the de-doping of the conductive polymer can be controlled through the content of the first hydrocarbon functional group or the combination of a second hydrocarbon functional group to be described below.

The second hydrocarbon functional group is a functional group having a relatively small carbon number among the long-chain hydrocarbon functional groups. The lower limit of the carbon number of the second hydrocarbon functional group may be 3, 4, 5, 6, 7, or 8 or so, and the upper limit thereof may be 9, 8, 7, or 6 or so. The carbon number of the second hydrocarbon functional group may be within a range of less than or equal to, or less than any upper limit selected from the above-listed upper limits; or within a range of more than or equal to, or more than any lower limit selected from the above-listed lower limits while being less than or equal to, or less than any upper limit selected from the above-listed upper limits. The closer the lower limit and the upper limit of the carbon number of the second hydrocarbon functional group are each to the values (6) presented in Examples of this specification, the more effectively the intended effect can be exerted.

Such a second hydrocarbon functional group dilutes the effect by the vibrational energy exhibited by the first hydrocarbon functional group at a predetermined temperature. Therefore, the first hydrocarbon functional group has the effect of lowering the onset point of the PTC effect, whereas the second hydrocarbon functional group has the effect of diluting such a first hydrocarbon functional group.

The carbon number of each of the first and second hydrocarbon functional groups may be the carbon number of a linear hydrocarbon chain present in the hydrocarbon functional group. For example, the first and second hydrocarbon functional groups may each independently be one or more selected from the group consisting of an alkyl group, an alkenyl group, an alkynyl group, an alkoxy group, an alkylcarbonyl group, and an alkylcarbonyloxy, and may be, in a suitable example, an alkyl group and/or an alkoxy group, where the carbon number may be the carbon number of the alkyl group, alkenyl group, alkynyl group, the alkoxy group, the alkyl group of the alkylcarbonyl group, and the alkyl group of the alkylcarbonyloxy group.

The alkyl group, alkenyl group, alkynyl group, the alkoxy group, the alkyl group of the alkylcarbonyl group, and the alkyl group of the alkylcarbonyloxy group may have a linear or branched structure, where in the case of the linear chain, the total carbon number may be within the above range, and in the case of the branched chain, the carbon number constituting the longest linear chain in the relevant branched chain structure may be within the above range.

As described above, the carbon number of the long-chain hydrocarbon functional group is related to vibration characteristics due to the applied heat energy, and if the carbon number changes, the vibration characteristics also change, and the vibration characteristics are also linked to the PTC characteristics of the conductive polymer. In the

conductive polymer of the present application, the first hydrocarbon functional group mainly plays a role in adjusting the temperature at which the PTC effect is expressed, that is, the temperature at which the resistance increase occurs, and the second hydrocarbon functional group plays a role in suppressing the increase in resistance at a relatively low temperature.

The ratio of the sum mole number of the unit having the first hydrocarbon functional group and the unit having the second hydrocarbon functional group to the mole number of all units present in the conductive polymer may be adjusted to be the same as the range of the ratio ($100 \times M_A/M$) of unit A as described above.

The lower limit of the ratio M2/M1 of the mole number M2 of the unit having the second hydrocarbon functional group in the conductive polymer to the mole number M1 of the unit having the first hydrocarbon functional group may be 0.01, 0.05, 0.1, 0.3, 0.4, 0.45, 0.5, 1, 1.5, or 2 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, 0.8, 0.7, 0.6, or 0.5 or so. The ratio may also be within a range of less than or equal to, or less than any upper limit selected from the above-listed upper limits; or within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the lower limit and the upper limit of the ratio M2/M1 are each to the value (about 0.5) presented in Examples of this specification, the more effectively the intended effect can be exerted.

Under such a ratio, the conductive polymer or the polymer layer can exhibit an appropriate PTC (Positive Temperature Coefficient) effect. That is, under the ratio as above, the polymer layer, the current collector applying the same, or the use thereof, and the like can exhibit an effect of suppressing the maximum temperature reduction and/or voltage reduction upon abnormal state expression.

The conductive polymer may contain a polar functional group or a unit having the polar functional group (hereinafter, may be referred to as a unit B) together with the long-chain hydrocarbon functional group or the unit A. The monomer having the polar functional group forming the unit may be a thiophene monomer.

Through the application of the polar functional group, the polymer layer comprising the conductive polymer may be bonded to another layer to have an appropriate bonding force, and the intended function may be efficiently achieved by uniformly forming the conductive copolymer layer. In addition, the polar functional group can additionally affect the start temperature of the PTC which is adjusted by the first and second hydrocarbon functional groups.

The term polar functional group is a functional group containing one or two or more polar atoms, for example, oxygen and/or nitrogen. An example of such a functional group includes a carboxyl group, a hydroxy group, an amino group, a cyano group, a nitro group, an ether group, or a functional group of Formula 3 below, but is not limited thereto. In one example, as the polar functional group, a functional group of Formula 5 below may be applied.

[Formula 5]

$$—L_5—O—\left[L_6—O\right]_n—R_9$$

In Formula 5, $L_5$ is a single bond, an alkylene group or an alkylidene group, $L_6$ is an alkylene group or an alkylidene group, $R_9$ is hydrogen or an alkyl group, and n is an arbitrary number.

In Formula 5, the matter that $L_5$ is a single bond means a form in which $L_5$ does not exist, and the oxygen atom between $L_5$ and $L_6$ is directly linked to a second monomer.

In one example, the alkyl group of $R_9$ in Formula 5 may be an alkyl group with 1 to 20 carbon atoms, 1 to 16 carbon atoms, 1 to 12 carbon atoms, 1 to 8 carbon atoms, or 1 to 4 carbon atoms, or may be a methyl group or an ethyl group. The alkyl group may be linear, branched, or cyclic, and may be suitably linear or branched. The alkyl group may be optionally substituted with one or more substituents.

The term alkylene group means a divalent functional group formed by removing hydrogen atoms from two different carbon atoms, respectively, in an alkane, and the term alkylidene group means a divalent functional group formed by removing two hydrogen atoms from one carbon atom in an alkane.

In one example, the alkylene groups of $L_5$ and $L_6$ in Formula 5 may each be an alkylene group with 2 to 20 carbon atoms, 2 to 16 carbon atoms, 2 to 12 carbon atoms, 2 to 8 carbon atoms, or 2 to 4 carbon atoms, or may be an ethylene group or a propylene group. The alkylene group may be linear, branched, or cyclic, and may be suitably linear or branched. The alkylene group may be optionally substituted with one or more substituents.

In one example, the alkylidene groups of $L_5$ and $L_6$ in Formula 5 may each be an alkylidene group with 1 to 20 carbon atoms, 1 to 16 carbon atoms, 1 to 12 carbon atoms, 1 to 8 carbon atoms, or 1 to 4 carbon atoms, or may be a methylidene group, an ethylidene group or a propylidene group. The alkylidene group may be linear, branched, or cyclic, and may be suitably linear or branched. The alkylidene group may be optionally substituted with one or more substituents.

In Formula 5, the lower limit of n may be 1, 2, 3 or 4, and the upper limit thereof may be 10, 9, 8, 7, 6, 5, 4, or 3 or so.

The n may be within a range of more than or equal to, or more than any lower limit selected from the above-listed lower limits while being less than or equal to, or less than any upper limit selected from the above-listed upper limits.

The mole numbers of the polar functional group and the long-chain hydrocarbon functional group in the conductive polymer may be controlled to ensure an appropriate effect.

For example, the lower limit of the ratio $M_A/M_P$ of the mole number $M_A$ of the long-chain hydrocarbon functional group or the unit having the functional group to the mole number $M_P$ of the polar functional group or the unit having the functional group in the conductive polymer may be 0.5, 1, 5, 10, 15, 16, 17, 18, or 19 or so, and the upper limit thereof may be 500, 450, 400, 350, 300, 250, 200, 150, 100, 95, 90, 85, 80, 75, 70, 65, 60, 55, 50, 45, 40, 35, 30, 25, 20, 15, or 10 or so. The ratio $M_A/M_P$ may be within a range of less than or equal to, or less than any upper limit selected from the above-listed upper limits; within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the lower and upper limits of the ratio $M_A/M_P$ are each to the value (about 9) presented in Examples of this specification, the more effectively the intended effect can be exerted.

The lower limit of the ratio of the sum mole number of the units A and B to the total mole number of all monomer units of the conductive polymer may be 50 mol%, 55 mol%, 60 mol%, 65 mol%, 70 mol%, 75 mol%, 80 mol%, 85 mol%, 90 mol%, or 95 mol% or so, and the upper limit thereof may be 100 mol%, 95 mol%, or 90 mol% or so. The ratio may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits.

The specific structure of the monomer forming the unit in the conductive polymer is not particularly limited if it has the long-chain hydrocarbon functional group and/or polar functional group as described above.

For example, the conductive polymer may contain a unit of Formula I below as the thiophene unit.

[Formula I]

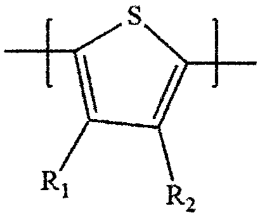

In Formula I, $R_1$ and $R_2$ may each independently be hydrogen, the polar functional group, or the long-chain hydrocarbon functional group.

In another example, $R_1$ and $R_2$ of Formula I may also be linked to each other to form a divalent functional group of Formula II below.

[Formula II]

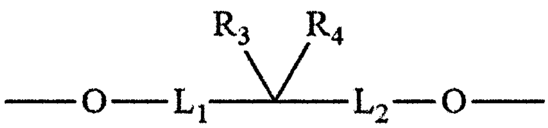

In Formula II, $L_1$ and $L_2$ may each independently be a single bond, an alkylene group, or an alkylidene group, and $R_3$ and $R_4$ may each independently be hydrogen, the polar functional group, or the long-chain hydrocarbon functional group.

In the case where $R_1$ and $R_2$ in Formula I above are each independently hydrogen, a polar functional group, or a long-chain hydrocarbon functional group, at least one of $R_1$ and $R_2$ above may be the polar functional group or the long-chain hydrocarbon functional group.

In the case where $R_1$ and $R_2$ in Formula I above form the divalent functional group of Formula II above, at least one of $R_3$ and $R_4$ above may be the polar functional group or the long-chain hydrocarbon functional group.

In Formula II, the meanings, and specific examples of the single bond, the alkylene group, and the alkylidene group are the same as in Formula 5.

In Formulas I and II, the technical significance and specific examples of the long-chain hydrocarbon functional

group and the polar functional group are as described above.

The lower limit of the ratio of the mole number of the unit of Formula I above may be 50 mol%, 55 mol%, 60 mol%, 65 mol%, 70 mol%, 75 mol%, 80 mol%, 85 mol%, 90 mol%, or 95 mol% or so, and the upper limit thereof may be 100 mol%, 95 mol%, or 90 mol% or so, based on the total unit of the conductive polymer. The ratio may be within a range of more than or equal to, or more than any lower limit selected from the above-listed lower limits; or within a range of less than, or equal to or less than any upper limit selected from the above-listed upper limits; or within a range of less than, or equal to or less than any upper limit selected from the above-listed upper limits while being more than or equal to, or more than any lower limit selected from the above-listed lower limits.

In one example, the conductive polymer may contain a unit represented by Formula 1 below. The unit represented by Formula 1 below may be a unit comprising the first hydrocarbon functional group as described above.

[Formula 1]

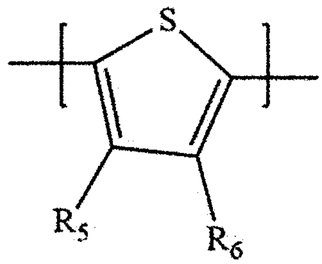

In Formula 1, $R_5$ and $R_6$ may each independently be hydrogen or the first hydrocarbon functional group. In this case, at least one of $R_5$ and $R_6$ may be the first hydrocarbon functional group.

In another example, $R_5$ and $R_6$ may be linked to each other to form a divalent functional group of Formula 2 below.

[Formula 2]

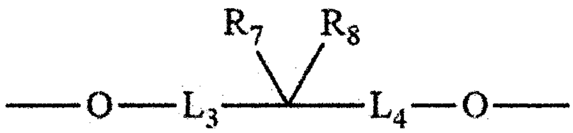

In Formula 2, $L_3$ and $L_4$ are each independently a single bond, an alkylene group, or an alkylidene group, and $R_7$ and $R_8$ are each independently hydrogen or the first hydrocarbon functional group, but at least one of $R_7$ and $R_8$ may be the first hydrocarbon functional group.

The specific details of the first hydrocarbon functional group are as described above. In addition, the details of the single bond, the alkylene group or the alkylidene group are as described in Formula 5 above.

The conductive polymer may contain a unit represented by Formula 3 below. The following unit may be a unit having the second hydrocarbon functional group.

[Formula 3]

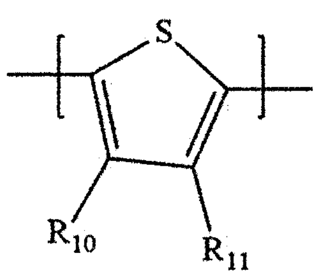

In Formula 3, $R_{10}$ and $R_{11}$ may each independently be hydrogen or the second hydrocarbon functional group, and in this case, at least one of $R_{10}$ and $R_{11}$ may be the second hydrocarbon functional group.

In another example, $R_{10}$ and $R_{11}$ may be linked to each other to form a divalent functional group of Formula 4 below.

[Formula 4]

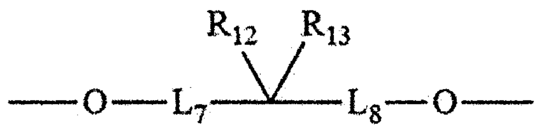

In Formula 4, $L_7$ and $L_8$ are each independently a single bond, an alkylene group, or an alkylidene group, and $R_{12}$ and $R_{13}$ are each independently hydrogen or the second hydrocarbon functional group, but at least one of $R_{12}$ and $R_{13}$ is the second hydrocarbon functional group.

The specific details of the second hydrocarbon functional group are as described above. In addition, the specific details of the single bond, the alkylene group, and the alkylidene group are as described in Formula 5 above.

The conductive polymer may include a unit represented by Formula 6 below. The unit of Formula 6 above is one example of a unit including the polar functional group.

[Formula 6]

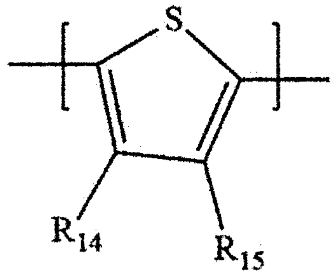

In Formula 6, $R_{14}$ and $R_{15}$ may each independently be hydrogen or the polar functional group, and in this case, at least one of $R_{14}$ and $R_{15}$ above is the polar functional group.

In another example, $R_{14}$ and $R_{15}$ of Formula 6 above may be linked to each other to form a divalent functional group of Formula 7 below.

[Formula 7]

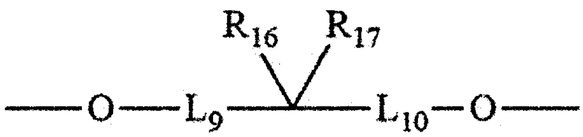

In Formula 7, $L_9$ and $L_{10}$ are each independently a single bond, an alkylene group, or an alkylidene group, and $R_{16}$ and $R_{17}$ are each independently hydrogen or a polar functional group, but at least one of $R_{16}$ and $R_{17}$ is the polar functional group.

The specific details of the polar functional group are as described above. The specific details of the single bond, the alkylene group, or the alkylidene group are as described in Formula 5 above.

When the conductive polymer contains units of Formulas 1 and 3 above, the ratio $100 \times M_{13}/M$ of the sum mole number $M_{13}$ of the units of Formulas 1 and 3 above to the mole number M of all units included in the conductive polymer may be adjusted within the same range as the ratio $100 \times M_A/M$ as described above.

The ratio M3/M1 of the mole number M1 of the unit of Formula 1 above and the mole number M3 of the unit of Formula 3 may be adjusted within the same range as the ratio M2/M1 of the mole number as described above. Here, the mole number M1 may be the mole number of the unit of Formula 1 above, and the mole number M2 may be the mole number of the unit of Formula 3 above.

In the case where the conductive polymer contains the unit of Formula 6 above, the ratio $M_A/M_P$ unit of the mole number $M_P$ of the unit and the mole number $M_A$ of the unit of Formula 1 and/or 3 above may be adjusted within the same range as the molar ratio $M_A/M_P$ as described above. Here, the mole number of the unit of Formula 6 may be $M_P$, and the mole number $M_A$ may be the mole number of the unit of Formula 1, the mole number of the unit of Formula 3, or the sum mole number of the unit of Formula 1 and the unit of Formula 3.

If the conductive polymer contains the above-described units in the ratio, it may further contain other units. The polymer layer comprises the conductive polymer, which can, accordingly, exhibit the above-described characteristics.

For example, the lower limit of the content of the conductive polymer included in the polymer layer may be 30 weight%, 35 weight%, 40 weight%, 45 weight%, 50 weight%, 55 weight%, 60 weight%, 65 weight%, 70 weight%, 75 weight%, 80 weight%, 85 weight%, 90 weight%, or 95 weight% or so, and the upper limit thereof may be 100 weight%, 95 weight%, 90 weight%, 85 weight%, 80 weight%, 75 weight%, 70 weight%, 65 weight%, 60 weight%, 55 weight%, or 50 weight% or so. The content is the content of the conductive polymer based on the total weight of the polymer layer. The content may be within a range of more than or equal to, or more than any lower limit selected from the above-listed lower limits; or within a range of more than or equal to, or more than any lower limit selected from the above-listed lower limits while being less than or equal to, or less than any upper limit selected from the above-listed upper limits. The closer the lower and upper limits of the content of the conductive polymer are each to the range (about 50 to 90 weight%) disclosed in the examples of the present specification or the range (about 50 to 75 weight%) presented in Examples 1 to 4, the more effectively the intended effect can be expressed.

The polymer layer may further comprise a conductive material. In addition, it may selectively comprise other necessary additives.

As the conductive material included in the polymer layer, a material having appropriate conductivity may be used, and for example, as the conductive material, one, or two or more selected from carbon particles, carbon fibers, graphene, graphite, carbon black, and carbon nanotubes may be used.

As the conductive material, an appropriate type may be selected and used from the foregoing, where the shape of the material may be a particle shape (spherical, irregular, or other shape), a plate shape or a fiber shape, and the like, but is not limited thereto.

The size of the conductive material may also be appropriately adjusted as needed. For example, the lower limit of the size of the conductive material may be 10, 30, 50, 55, 60, 100, 150, 200, 250, 300, 350, 400, 450, 500, 550, 600, 650, 700, 750, 800, 850, 900, 950, 1,000, 5,000, or 10,000 or so, and the upper limit thereof may also be 100,000, 90,000, 80,000, 70,000, 60,000, 50,000, 40,000, 30,000, 20,000, 10,000, 5,000, 1,000, 950, 900, 850, 800, 750, 700, 650, 600, 550, 500, 450, 400, 350, 300, 250, 200, 200, 150, 100, 90, 70, or 65 or so. The unit of the size is nm. The size may be within a range of more than or equal to, or more than any lower limit selected from the above-listed lower limits; or within a range of less than, or equal to or less than any upper limit selected from the above-listed upper limits; or within a range of less than, or equal to or less than any upper limit selected from the above-listed upper limits while being more than or equal to, or more than any lower limit selected from the above-listed lower limits. The closer the upper and lower limits of the size are each to the size (about 60 nm) of the conductive material used in the examples of the present specification, the more effectively the intended effect can be expressed.

The size may be the average particle diameter (so-called D50 particle diameter) when the conductive material is in a particle shape, may be the thickness, long side, or cross section when it is in a plate shape, and may be the diameter or length of the cross section when it is in a fiber shape.

When the conductive material is fibrous, the lower limit of the aspect ratio (length/cross-sectional diameter) may be 5, 10, 15, 20, 25, 30, 35, 40, 45, 50, 55, 60, or 65 or so, and the upper limit thereof may be 200, 195, 190, 185, 180, 175, 170, 165, 160, 155, 150, 145, 140, 135, 130, 125, 120, 115, 110, 105, 100, 95, 90, 85, 80, 75, or 70 or so. The aspect ratio may be within a range of more than or equal to, or more than any lower limit selected from the above-listed lower limits; or within a range of less than, or equal to or less than any upper limit selected from the above-listed upper limits; or within a range of less than, or equal to or less than any upper limit selected from the above-listed upper limits while being more than or equal to, or more than any lower limit selected from the above-listed lower limits.

Considering dispersibility, and the like, the conductive material may also be surface-treated.

In such a case, a surface-treating agent having appropriate compatibility with the conductive polymer may be used as the surface-treating agent. For example, the conductive material may be surface-treated with a polyphenol-based compound as the surface-treating agent. The polyphenol-based compound means a compound comprising a structure containing two or more hydroxy groups substituted and connected to benzene. Such a compound may be exemplified by a so-called catechol-based compound (i.e., catechol or a compound containing the relevant structure), and an example thereof includes dopamine, polydopamine, 3,4-dihydroxy phenyl alanine, norepinephrine, tannic acid, humic acid and/or lignin, and the like, but is not limited thereto.

A method of surface-treating a conductive material with the surface-treating agent is not limited, and for example, a method of mixing the conductive material and the surface-treating agent in an appropriate solvent, and the like, or a method of synthesizing or polymerizing the surface-treating agent on the surface of the conductive material may be applied.

The weight ratio of the conductive material may be adjusted according to the purpose within the polymer layer. For example, the lower limit of the weight ratio (parts by weight) of the conductive material, relative to 100 parts by weight of the conductive polymer in the polymer layer, may be 5 parts by weight, 10 parts by weight, 15 parts by weight, 20 parts by weight, 25 parts by weight, 30 parts by weight, 40 parts by weight, 50 parts by weight, 60 parts by weight, 65 parts by weight, 70 parts by weight, 80 parts by weight, 90 parts by weight, 95 parts by weight, or 100 parts by weight or so, and the upper limit thereof may be 195 parts by weight, 190 parts by weight, 180 parts by weight, 170 parts by weight, 160 parts by weight,

150 parts by weight, 145 parts by weight, 140 parts by weight, 135 parts by weight, 130 parts by weight, 125 parts by weight, 120 parts by weight, 100 parts by weight, 80 parts by weight, 60 parts by weight, or 50 parts by weight or so. The content may be within a range of more than or equal to, or more than any lower limit selected from the above-listed lower limits; or within a range of less than, or equal to or less than any upper limit selected from the above-listed upper limits; or within a range of less than, or equal to or less than any upper limit selected from the above-listed upper limits while being more than or equal to, or more than any lower limit selected from the above-listed lower limits. The closer the upper and lower limits of the weight ratio of the conductive material are each to the ratio applied in the examples of the present specification, the more effectively the intended characteristics can be expressed.

In another example, the conductive material may be present in the polymer layer so that D of Equation 4 below is within a predetermined range.

[Equation 4]

$$D = W/T$$

In Equation 4, W is the content of the conductive material in the polymer layer, and T is the thickness of the polymer layer.

The content of the conductive material is, as weight%, the weight ratio of the conductive material included in the polymer layer based on the total weight of the polymer layer, and the unit of the thickness of the polymer layer is $\mu$m.

The D of Equation 4 above may represent a distribution density of the conductive material within the polymer layer.

The lower limit of the D of Equation 4 above may be, for example, 40, 60, 80, 100, 150, 200, 250, or 300 or so, and the upper limit thereof may be, for example, 600, 550, 500, 450, 400, 350, 300, 250, 200, 180, 150, 100, 80, or 60 or so. The unit of the D is weight%/$\mu$m, where weight% is weight%. The D may be within a range of less than, or equal to or less than any upper limit selected from the above-listed upper limits while being more than or equal to, or more than any lower limit selected from the above-listed lower limits. The closer the lower and upper limits of the D are each to the range of Examples 1 to 4 disclosed in the present specification, the more efficiently the desired effect can be secured.

In another example, the lower limit of D in Equation 4 above may be, for example, 0, 5, 10, or 15 or so, and the upper limit thereof may be, for example, 30, 25, or 20 or so. The unit of the D is weight%/$\mu$m, where weight% is weight%. The D may be within a range of less than, or equal to or less than any upper limit selected from the above-listed upper limits while being more than or equal to, or more than any lower limit selected from the above-listed lower limits. The closer the lower and upper limits of the D are each to the range of Example 5 disclosed in the present specification, the more efficiently the desired effect can be secured.

The conductive material thus included appropriately interacts with the conductive polymer, whereby it is possible to enable the intended polymer layer to be effectively formed.

The present specification discloses a method for manufacturing the electrode current collector or a method for forming the polymer layer. As described above, the PTC effect, and the like of the polymer layer may be adjusted according to the functional groups included in the conductive polymer and the conductive material, where the method comprises a process for controlling the appropriate orientation or arrangement state of the functional groups and the distribution state of the conductive material.

The method may comprise a step of forming the polymer layer using a solution including the conductive polymer and, if necessary, additionally including the conductive material.

In addition, the method may comprise, for example, a step of forming a polymer layer precursor and a step of heat-treating the polymer layer precursor.

The precursor may comprise the conductive polymer and, if necessary, may additionally comprise the conductive material.

As the conductive polymer and/or conductive material used for forming the precursor, the conductive polymer and conductive material as described above may be used. The conductive polymer, and the like may be produced by a known method, or the obtained commercially available product may be used. For example, as the method for producing polythiophene, a method of using an oxidation polymerization reaction, a method of using a radical reaction, or the like is known, where such a method may also be applied to the process of forming the conductive polymer. In addition, a commercially available product may also be used as the conductive material, and its surface treatment may also be performed in a known manner.

The precursor is a layer comprising the conductive polymer and/or the conductive material, which means a layer converted into the polymer layer.

Such a precursor may be formed in a known manner, and for example, it may be formed in a manner of coating a polymer solution in which the conductive polymer, and the like are dispersed in an appropriate solvent.

As the solvent, an appropriate solvent capable of dispersing the conductive polymer and the conductive material

may be selected, and for example, an ether-based solvent such as diethyl ether, tetrahydrofuran, dioxane, trioxane, dimethoxy ethane, or toluene; an aromatic hydrocarbon-based solvent such as ethyl benzene, or an alicyclic hydrocarbon solvent such as cyclohexane; or a tertiary amine-based solvent such as tetramethylethylenediamine (TMEDA) or hexamethylphosphorictriamide (HMPA), or the like may be used, or a mixed solvent including two or more of the foregoing, and the like may be used, but is not limited thereto.

In the step, the lower limit of the solid content concentration of the polymer solution, that is, the concentration of the conductive polymer and/or conductive material present in the solution, may be 0.5, 1, 1.5, 2, 2.5, 3, or 3.5 or so, and the upper limit thereof may be 20, 18, 16, 14, 12, 10, 9, 8, 7, 6, 5, 4, or 3 or so. The unit of the concentration is weight%. The concentration may be within a range of more than or equal to, or more than any lower limit selected from the above-listed lower limits while being less than or equal to, or less than any upper limit selected from the above-listed upper limits. Such a concentration may be changed as needed.

The polymer solution is used to form a polymer layer precursor. This process may usually be performed through a process of coating the polymer solution on an appropriate process base material. In this instance, the coating method is not particularly limited.

The method further comprises a step of heat-treating the precursor of the polymer layer. By adjusting the conditions in this process, the orientation state of the functional groups in the conductive polymer and/or the dispersion state of the conductive material is adjusted or stabilized, whereby it is possible to form a polymer layer satisfying the intended PTC effect and other characteristics.

The polymer solution may be used to form a polymer layer on a current collector body. This process typically comprises a step of coating the polymer solution on a current collector body and a step of performing heat treatment, such as drying or annealing, on the coated coating solution. In this process, the orientation state of the functional groups and the dispersion state of the conductive material may be controlled by the heat-treating conditions.

The heat-treating step may be performed in two steps. For example, the heat-treating step may comprise a first step of primarily heat-treating the precursor at a temperature $T_1$; and a second step of secondarily heat- treating the precursor at a temperature $T_2$ following the first step.

For example, the temperature $T_1$ of the primary heat treatment may be adjusted within a predetermined range. For example, the lower limit of the temperature $T_1$ may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 290°C, 280°C, 270°C, 260°C, 250°C, 240°C, 230°C, 220°C, 210°C, 200°C, 190°C, 180°C, 170°C, 160°C, 150°C, or 140°C or so. The temperature $T_1$ may be within a range of less than or equal to, or less than any upper limit selected from the above-listed upper limits while being more than or equal to, or more than any lower limit selected from the above-listed lower limits.

In the heat treatment step, the temperature $T_1$ of the primary heat treatment and the temperature $T_2$ of the secondary heat treatment may be adjusted. For example, the lower limit of the ratio $T_1/T_2$ of the temperatures $T_1$ and $T_2$ may be 0.1, 0.2, 0.3, 0.4, 0.5, 0.6, 0.7, 0.8, 0.9, 1, or 1.05 or so, and the upper limit thereof may be 5, 4.5, 4, 3.5, 3, 2.5, 2, 1.9, 1.8, 1.7, 1.6, 1.5, 1.4, 1.3, 1.2, or 1.1 or so. The ratio $T_1/T_2$ may be within a range of less than or equal to, or less than any upper limit selected from the above-listed upper limits while being more than or equal to, or more than any lower limit selected from the above-listed lower limits.

In one example, in the heat treatment step, the temperature $T_1$ of the primary heat treatment may be adjusted to be higher than the temperature $T_2$ of the secondary heat treatment.

The ratio $Q_2/Q_1$ of the heat treatment time $Q_1$ in the primary heat treatment and the heat treatment time $Q_2$ in the secondary heat treatment may be additionally adjusted. For example, the lower limit of the ratio $Q_2/Q_1$ may be 1, 2, 3, 4, 5, 6, 7, 8, 9, 10, 11, 12, 13, 14, or 15 or so, and the upper limit thereof may be 100, 90, 80, 70, 60, 50, 40, 30, 20, 19, 18, 17, 16, or 15 or so. The ratio $Q_2/Q_1$ may be within a range of less than or equal to, or less than any upper limit selected from the above-listed upper limits while being more than or equal to, or more than any lower limit selected from the above-listed lower limits.

The lower limit of the secondary heat treatment time $Q_2$ may be 5 minutes, 10 minutes, 15 minutes, 20 minutes, 25 minutes, 30 minutes, 35 minutes, 40 minutes, 45 minutes, 50 minutes, 51 minutes, 52 minutes, 53 minutes, 54 minutes, 55 minutes, 56 minutes, 57 minutes, 58 minutes, 59 minutes, or 60 minutes or so, and the upper limit thereof may be 300 minutes, 280 minutes, 260 minutes, 240 minutes, 220 minutes, 200 minutes, 180 minutes, 160 minutes, 140 minutes, 120 minutes, 100 minutes, 80 minutes, or 60 minutes or so. The secondary heat treatment time $Q_2$ may be within a range of less than or equal to, or less than any upper limit selected from the above-listed upper limits while being more than or equal to, or more than any lower limit selected from the above-listed lower limits.

The polymer layer may be formed through the process.

Through such a heat treatment process, the orientation state of the conductive polymer (for example, the orientation state of the long-chain hydrocarbon functional group and/or the polar functional group) and/or the dispersion state of the conductive material is adjusted or stabilized, whereby it is possible to form a polymer layer satisfying the intended PTC effect and other characteristics.

Through the process, the intended polymer layer and a current collector comprising the same are manufactured. The process may comprise an appropriate post-treatment process, if necessary.

The present specification also discloses an electrode comprising the current collector.

The electrode may comprise the current collector and an active material layer formed on the polymer layer of the current collector.

A commonly applied layer can also be used as the active material layer.

Typically, the active material layer comprises an electrode active material. The specific type of the electrode active material is not particularly limited, and materials to form a positive electrode or a negative electrode can usually be used.

For example, when the active material layer is a positive electrode active material layer, the electrode active material may include layered compounds such as lithium cobalt oxide ($LiCoO_2$) or lithium nickel oxide ($LiNiO_2$), or compounds substituted with one or more transition metals; lithium iron oxides such as $LiFe_3O_4$; lithium manganese oxides such as Formula $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiV_3O_8$, $V_2O_5$, or $Cu_2V_2O_7$; Ni-site lithium nickel oxides represented by Formula $LiNi_{1-c2}M_{c2}O_2$ (where M is at least one selected from the group consisting of Co, Mn, Al, Cu, Fe, Mg, B and Ga, and $0.01 \leq c2 \leq 0.3$ is satisfied); lithium manganese composite oxides represented by Formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and $LiMn_2O_4$ in which a part of Li in the formula is substituted with alkaline earth metal ions, and the like, but is not limited thereto.

When the active material layer is a negative electrode active material layer, as the electrode active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_a$ ($0 < a < 2$), $SnO_2$, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may also be used as the negative electrode active material, and as the carbon material, low crystalline carbon and high crystalline carbon, and the like may also be used. As the low crystalline carbon, soft carbon and hard carbon are representative, and as the high crystalline carbon, high-temperature baked carbons such as amorphous, plate-like, scale-like, spherical, or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

The electrode active material may be included in the active material layer within a range of about 80 weight% to 99.5 weight%, or within a range of 88 weight% to 99 weight% relative to the total weight of the active material layer, but the ratio may be changed depending on the use or design of the electrode.

The active material layer may further comprise a binder. The binder serves to improve attachment between the active materials, and adhesive force on between the active material layer and the current collector body. An example of the binder is not particularly limited, and one or more may be selected from the group consisting of, for example, PVDF (poly(vinylidene fluoride), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, an ethylene vinyl acetate COpolymer (polyethylene-co-vinyl acetate), and polyarylate, and used.

In one example, the binder may be included in the active material layer within a range of 0.1 parts by weight to 10 parts by weight, or 0.5 parts by weight to 5 parts by weight relative to 100 parts by weight of the electrode active material, but is not limited thereto.

The active material layer may further comprise a conductive material, as needed. If the conductive material has conductivity without causing chemical changes in the secondary battery, it is not particularly limited, any known material can be used. For example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

In one example, the conductive material may be included in the active material layer in an amount of 0.1 parts by weight to 20 parts by weight, or 0.3 parts by weight to 10 parts by weight relative to 100 parts by weight of the electrode active material, but is not limited thereto.

The active material layer may also further comprise any necessary known components in addition to the above-described components optionally.

The electrode may be manufactured according to a usual electrode forming method if the current collector is used.

The present specification also relates to an electrode assembly or electrochemical element comprising the electrode, for example, a secondary battery.

The electrochemical element may comprise the electrode as the positive electrode and/or the negative electrode. If the electrode is used as the positive electrode and/or the negative electrode, other configurations or manufacturing methods of the electrochemical element are not particularly limited, and known methods can be applied.

## Advantageous Effects

The present specification discloses a current collector. The current collector comprises a polymer layer exhibiting a so-called PTC (Positive Temperature Coefficient) effect. The polymer layer exhibits the PTC effect very precisely responding to a temperature and an external voltage. The polymer layer can quickly switch between a state exhibiting excellent electrical properties such as low resistance and a state exhibiting insulator properties due to increased resistance at a necessary time. The current collector is applied to various electronic/electrical devices, whereby in a normal state, it does not affect driving of the devices, and the like through excellent electrical properties, and in an abnormal state, it is possible to ensure stability through a rapid resistance increase. For example, the current collector is applied to a secondary battery to be converted into an insulator in an abnormal state, thereby suppressing additional current flow, whereby it is possible to secure excellent stability against risks caused by TR and TP, and the like.

The present specification also discloses an electrode assembly and a secondary battery, and the like, comprising the current collector.

## Description of Drawings

Figure 1 is a cross-sectional diagram of an exemplary current collector.
Figure 2 is a cross-sectional diagram of an exemplary electrode.
Figure 3 is NMR analysis results for a monomer of Preparation Example 1.
Figure 4 is a diagram showing a shape of a positive electrode.
Figure 5 is a diagram showing a shape of a negative electrode.
Figure 6 is a side view of an exemplary electrode assembly.
Figure 7 is a front view of an exemplary electrode assembly.
Figure 8 is a cross-sectional diagram of an exemplary needle.
Figure 9 is a side view of an exemplary needle.
Figure 10 is a diagram showing an exemplary needle test procedure.

## Mode for Invention

Hereinafter, the conductive polymer, and the like will be specifically described through examples and comparative examples, but the scope of the conductive polymer, and the like is not limited by the following examples.

### 1. NMR analysis

$^{1}$H-NMR analyses were performed at room temperature (about 25°C) using NMR equipment having a 5 mm triple resonance probe and including a Bruker UltraShield spectrometer (300 MHz). A sample was diluted in a solvent ($CDCl_3$) for NMR measurement to a concentration of about 10 mg/ml or so and used, and the chemical shift was expressed in ppm.

### 2. GPC (Gel Permeation Chromatograph)

Molecular weight characteristics were measured using GPC (Gel permeation chromatography). A sample is placed in a 5 mL vial and diluted with chloroform to a concentration of about 1 mg/mL or so. The standard sample for calibration and the analysis sample were filtered through a syringe filter (pore size: 0.45 μm), and then measured. As the analysis program, Waters' Empower 3 was used, and a weight average molecular weight (Mw) and a number average molecular weight (Mn) were each obtained by comparing the elution time of the sample with the calibration curve, and the molecular weight distribution (PDI) was calculated by the ratio (Mw/Mn).

The measurement conditions of GPC are as follows.

<GPC measurement conditions>

Device: Waters' 2414
Column: using 3 Styragels from Waters
Solvent: THF (tetrahydrofuran)
Column temperature: 35°C
Sample concentration: 1mg/mL, 1μL injection
Standard sample: polystyrene (Mp: 3900000, 723000, 316500, 52200, 31400, 7200, 3940, 485)

### 3. Thickness measurement

A thickness of a polymer layer was measured using KEYENCE's VK-X series confocal laser microscope. An aluminum foil on which the polymer layer was formed was cut so that a width and a length were each 3 cm, thereby preparing a specimen, and about half of the polymer layer was removed from the specimen with acetone to expose the lower aluminum foil. The aluminum foil side of the specimen, where the polymer layer was not formed, was pressed against a flat plate, and measurement was started. An area where a width and a length were each 100 μm was observed under the microscope, but the polymer layer and the exposed aluminum foil of the specimen were each adjusted to be positioned approximately halfway within the observation area, and a 3D scan was performed. An average value P of heights was measured by optionally designating 10 points from the polymer layer within the observation area, and an average value A of heights was obtained by measuring the heights optionally at 10 points on the aluminum foil, and then the value obtained by subtracting the average value A from the average value P was used as the thickness of the polymer layer.

### 4. Average particle diameter

Average particle diameters (D50 particle diameter) of conductive particles, an electrode active material, and a particle-shaped binder, and the like were measured using a MASTERSIZER3000 device from Marvern in accordance with ISO-13320 standard. Toluene was used as a measurement solvent. If a sample (conductive particles) is dispersed in the solvent and the laser is irradiated, the laser is scattered by the sample dispersed in the solvent. Since the intensity and directionality of the scattered laser vary depending on the size of the particle, the average particle diameter can be obtained by analyzing this using a Mie theory. Through the above analysis, the measurement results were converted into particle diameters of spheres having the same volume as the dispersed sample to obtain a volume-based cumulative graph of particle size distribution, and the particle diameter (median particle diameter) at 50% accumulation of the graph was designated as the average particle diameter (D50 particle diameter).

### 5. Needle test

A mono-cell for the needle test was manufactured in the following manner.

A positive electrode was manufactured by forming a positive electrode active material layer on a surface of a polymer layer of each electrode current collector obtained in the examples or comparative examples (in the case of Comparative Example 1, a positive electrode active material layer was formed on an aluminum foil). The positive electrode active material layer was formed to a thickness of about 61 μm or so by applying a slurry onto the polymer layer with a doctor blade, drying it at 130°C for 30 minutes (slurry loading amount: about 24.4 mg/cm$^2$), and then rolling it to a void ratio of about 18% or so.

The slurry was prepared by mixing lithium cobalt oxide ($LiCoO_2$), a conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 90.5:1:1:7.5 ($LiCoO_2$: conductive material: PVDF: NMP).

The positive electrode was formed to have a shape as shown in Figure 4.

In Figure 4, the length $L_1$ is about 42 mm or so, the width $W_1$ is about 30 mm or so, the length $L_2$ is about 7 mm or so, and the width $W_2$ is about 6 mm or so. The polymer layer and the positive electrode active material layer were formed only in the region defined by the length $L_1$ and the width $W_1$, and the positive electrode active material layer and the polymer layer were not formed on the tab portion having the length $L_2$ and the width $W_2$.

The negative electrode was manufactured in the following manner.

A copper foil with a thickness of 8 μm was used as a current collector. A negative electrode active material layer was formed on the copper foil using a slurry. The slurry was prepared by mixing water, SBR (styrene-butadiene rubber) (particle-shaped binder, average particle diameter (D50 particle diameter): about 150 nm), a thickener (CMC, carboxymethyl cellulose), and an electrode active material (1) (artificial graphite (GT), average particle diameter (D50 particle

diameter): 20 μm), and an electrode active material (2) (natural graphite (PAS), average particle diameter (D50 particle diameter): 15 μm) in a weight ratio of 48.5:1:0.5:45:5 (water: SBR: CMC: active material (1): active material (2)). The slurry was coated by a gap coating method and dried at about 75°C for about 10 minutes. After drying, the loading amount of the slurry was about 13.88 mg/$cm^2$ or so, and the active material layer was formed by rolling it so that the void ratio was about 26% or so.

Such a negative electrode was formed to have a shape of Figure 5.

In Figure 5, the length $L_3$ is the same as the length $L_1$ of the positive electrode, the width $W_3$ is the same as the width $W_1$ of the positive electrode, the length $L_4$ is the same as the length $L_2$ of the tab portion of the positive electrode, and the width $W_4$ is the same as the width $W_2$ of the tab portion of the positive electrode. The active material layer was formed only in the region defined by the length $L_3$ and the width $W_3$, and the active material layer was not formed on the tab portion having the length $L_4$ and the width $W_4$.

A mono-cell was manufactured using the positive electrode and the negative electrode. The mono-cell was manufactured using a separator of W-SCOPE KOREA's WL20C model and Enchem's electrolyte (1M $LiPF_6$ solution (solvent: EC/DMC/EMC=3/4/3 (mass ratio), EC: Ethylene Carbonate, DMC: dimethyl carbonate, EMC: ethylmethyl carbonate)).

As in Figure 6, an electrode assembly was manufactured by laminating the positive electrode, the negative electrode, and the separator. As in the side view of the electrode assembly of Figure 6, the lamination was manufactured so that the aluminum foil (C1), the polymer layer (C2), the positive electrode active material layer (C3), the separator (S), the negative electrode active material layer (A2), and the negative electrode current collector (copper foil) (A1) were sequentially laminated, and as in Figure 7, the tab portions of the positive and negative electrodes were positioned at ends spaced apart from each other in the same direction when viewed from the front.

Subsequently, the electrode assembly was inserted into an envelope-shaped pouch (manufacturer: DNP, product name: D-EL408PH (3)) with a thickness of about 152 μm or so, and the electrolyte was injected into the pouch, and then the pouch was sealed to manufacture a mono-cell. The sealing was performed so that the tab portions of the positive and negative electrodes were exposed to the outside.

A mono-cell manufactured in the same manner using the current collector of Comparative Example 1 was applied as a reference mono-cell.

As a needle for the needle test, a needle (N) (Korea Vaccine, KOVAX-NEEDLE 18G) having a cross-sectional shape of a circular shape with a diameter (D1) of about 1.2 mm and having a hole with a diameter (D2) of about 0.9 mm or so formed in the center of the circular shape, wherein the needle was manufactured by inserting a K-type thermocouple (T) (OMEGA, TT-K-30-SLE) into the hole, as in Figures 8 and 9, was used. Figure 8 is a cross-sectional diagram of the needle (N) with the thermocouple (T) inserted, and Figure 9 is a side view of the needle (N) with the thermocouple (T) inserted.

Using the mono-cell and the needle, the test was conducted as follows.

The needle was mounted on a syringe pump device (KDS scientific., LEGATO 200) and moved at a constant speed, thereby preparing so that the mono-cell could be penetrated. A jig was used to fix the mono-cell, and the fixed mono-cell was penetrated by the needle.

After the mono-cell was set in a fully charged state (SOC (State of Charge) 100%), as in Figure 10, the pouch (P) on the positive current collector (C1, aluminum foil) side was removed from the pouches (P) to expose the positive current collector (C1), and the needle (N) was advanced toward the exposed positive current collector (C1), whereby athe needle allowed to penetrate the mono-cell. At this time, the penetration was performed by advancing the needle (N) at a speed of 0.02 mm/sec, and was performed to penetrate the center (weighted center) of the electrode assembly. In addition, the penetration was performed until the needle (N) penetrated the negative current collector (A1, copper foil) and reached the pouch (P). In Figure 10, ST is a surface temperature sensor installed on the positive current collector (C1).

If it allows the needle (N) to penetrate from the positive current collector (C1) to the negative current collector (A1) in the manner, a short circuit occurs, whereby a voltage drop is observed. The time point when the voltage first became minimum due to the voltage drop was set to 0 seconds. From the time point (0 seconds) when the voltage became minimum, the temperature increase was measured with the thermocouple inserted into the needle over time to determine the time point when the maximum temperature was confirmed, and the maximum temperature and voltage at the time point were also determined.

The voltage was determined by connecting a voltmeter (V) to the tab portions of the positive and negative electrodes as in Figure 10.

The needle test was also performed in the same manner for the reference mono-cell.

**Preparation Example 1. Synthesis of monomer (A)**

The monomer of the following Formula A was synthesized in the following manner.

[Formula A]

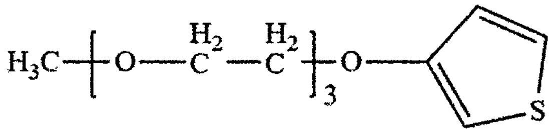

3 g (26.28 mmol, 1 eq) of 3-methoxythiophene and 7.03 g (39.42 mmol, 1.5 eq) of triethylene glycol monomethyl ether were dissolved in 150 ml of toluene together with 500 mg of p-toluenesulfonic acid (p-TsOH) (2.63 mmol, 0.1 eq). The mixture was refluxed at 120°C under a nitrogen atmosphere, and simultaneously reacted (transetherification), whereby methanol produced by the reaction was removed by a 4A type molecular sieve filled in an extractor (soxhlet extractor). The reactant was cooled to room temperature after reflux for 24 hours, and then quenched with water, extracted with ethyl acetate, and then washed with brine, and dried over magnesium sulfate ($MgSO_4$). The solvent was removed by a rotary evaporator, and the residue was purified by column chromatography eluting with methylene chloride/hexane (2:1) to obtain the target compound (monomer (A)). The NMR analysis results for the monomer (A) are as shown in Figure 3.

**Preparation Example 2. Synthesis of polythiophene (B)**

To a solution, in which 3.20 g (19.71 mmol, 3 eq) of iron (III) chloride was dissolved in 150 ml of methylene chloride, 1 g (3.94 mmol, 0.6 eq) of 3-dodecylthiophene, 0.33 g (1.97 mmol, 0.3 eq) of 3-hexylthiophene, and 0.16 g (0.66 mmol, 0.1 eq) of the monomer (A) of Preparation Example 1 were introduced, and polymerized at 30°C for 24 hours to produce polythiophene (A). The polymerization solution was placed in an osmosis membrane with an MWCO (molecular weight of cut-off) of 5000, and then immersed in 200ml of an acetonitrile solvent to remove unreacted iron chloride, monomers, and low-molecular-weight oligomers. The residue precipitated inside the osmosis membrane was washed with methanol, and dried at 60°C for 12 hours to produce polythiophene (A). The weight-average molecular weight (Mw) and number-average molecular weight (Mn) of polythiophene (A) were 118,000 g/mol and 24,500 g/mol, respectively.

**Preparation Example 3. Polydopamine-coated conductive particles**

Carbon black particles (IMERYS, C-NERGY™ SUPER C65) were used as the conductive particles. The average particle diameter (D50 particle diameter) of the conductive particles was about 60 nm or so.

DHC (dopamine hydrochloride) (CAS No. 62-31-7) was added to a buffer solution and stirred at room temperature (about 25°C). As the buffer solution, BIOSESANG's 0.1M pH 8.5 Tris-buffer product was used. The concentration of DHC in the final solution was about 2 mg/mL or so. The conductive particles were dispersed (sonication for 1 hour) in the mixture of the buffer solution and DHC at a concentration of about 4 mg/mL, and stirred for additionally about 18 hours to form a coating layer of polydopamine on the conductive particles. After filtering under reduced pressure using a paper filter, the resultant particles were vacuum-dried to obtain conductive particles coated with polydopamine.

**Example 1.**

A polymer solution was prepared by dispersing a mixture of polythiophene (B) of Preparation Example 2 and conductive particles (P) of Preparation Example 3 in a weight ratio of 3:1 (B: P) in toluene at a concentration of about 4 weight%. The polymer solution was prepared by dispersing the polythiophene (B) and conductive particles (P) in toluene at about 30°C for about 4 hours using an ultrasonic disperser. The polymer solution was coated on a current collector body using a Meyer bar coating method, dried in a drying oven at about 140°C for about 4 minutes or so (primary heat treatment), and then additionally heat-treated at 130°C for about 60 minutes or so (secondary heat treatment) to form a polymer layer with a thickness of about 300 nm or so, thereby manufacturing an electrode current collector. As the current collector body, an Al foil with a thickness of about 15 μm or so was used.

**Example 2.**

An electrode current collector was manufactured by forming a polymer layer in the same manner as in Example 1, except that the thickness of the polymer layer was set to about 600nm or so.

**Example 3.**

An electrode current collector was manufactured in the same manner as in Example 1, except for using a polymer

solution prepared by dispersing a mixture of polythiophene (B) of Preparation Example 2 and conductive particles (P) of Preparation Example 3 in a weight ratio of 1:1 (B: P) in toluene at a concentration of about 4 weight%.

**Example 4.**

An electrode current collector was manufactured by forming a polymer layer in the same manner as in Example 3, except that the thickness of the polymer layer was set to about 600nm or so.

**Example 5.**

An electrode current collector was manufactured in the same manner as in Example 2, except for using a polymer solution prepared by dispersing a mixture of polythiophene (B) of Preparation Example 2 and the conductive particle (P) of Preparation Example 3 in a weight ratio of 9:1 (B: P) in toluene at a concentration of about 4 weight%.

**Example 6.**

A polymer solution was manufactured by dispersing polythiophene (B) of Preparation Example 2 in toluene at a concentration of about 4 weight%. The polymer solution was manufactured by dispersing the polythiophene (B) in toluene at a temperature of about 30°C for about 4 hours using an ultrasonic disperser. The polymer solution was coated on a current collector body using a Meyer bar coating method, dried in a drying oven at about 140°C for about 4 minutes or so (primary heat treatment), and then additionally heat-treated at 130°C for about 60 minutes or so (secondary heat treatment) to form a polymer layer with a thickness of about 300 nm or so, thereby manufacturing an electrode current collector. As the current collector body, an Al foil with a thickness of about 15 μm or so was used.

**Example 7.**

An electrode current collector was manufactured in the same manner as in Example 1, except for using a polymer solution prepared by dispersing a mixture of polythiophene (B) of Preparation Example 2 and conductive particles (P) of Preparation Example 3 in a weight ratio of 9:1 (B: P) in toluene at a concentration of about 4 weight%.

**Comparative Example 1**

An Al foil with a thickness of about 15 μm or so was used as an electrode current collector in a state where a polymer layer was not formed.

**Comparative Example 2.**

An electrode current collector was manufactured in the same manner as in Example 1, except for using a polymer solution prepared by dispersing a mixture of polythiophene (B) of Preparation Example 2 and the conductive particle (P) of Preparation Example 3 in a weight ratio of 1:2 (B: P) in toluene at a concentration of about 4 weight%.

**Comparative Example 3.**

An electrode current collector was manufactured by forming a polymer layer in the same manner as in Comparative Example 2, except that the thickness of the polymer layer was set to about 600nm or so.

The results of the needle test performed on the electrode current collectors of Examples and Comparative Examples were described in Tables 1 and 2 below.

In Tables 1 and 2 below, $T_2$ is the maximum temperature confirmed by the thermocouple confirmed by performing the needle test on the reference mono-cell (mono-cell manufactured using the current collector of Comparative Example 1), and $T_1$ is the maximum temperature confirmed by the thermocouple confirmed by performing the needle test on each of Examples and Comparative Examples. The units of the temperatures $T_1$ and $T_2$ are °C. In Table 1 below, $\Delta T$ is a value obtained by substituting the temperatures $T_1$ and $T_2$ into the equation $(T_2 - T_1)/T_2 \times 100$, and its unit is %.

$T_0$ in Tables 1 and 2 is the temperature confirmed by the thermocouple of the needle at the time point of 0 seconds (the time point when the voltage becomes minimum due to short circuit occurrence in the needle test = the time point when the voltage becomes minimum due to a voltage drop in the needle test) in the needle test, and its unit is °C.

$S_1$ in Tables 1 and 2 is the time required from the time point of 0 seconds in the needle test to the time point when the maximum temperature $T_1$ is confirmed, and its unit is seconds.

$V_1$ in Tables 1 and 2 is the voltage of the mono-cell in the fully charged state before performing the needle test, and

$V_2$ is the minimum voltage confirmed by performing the needle test on the electrode current collector of each of Examples and Comparative Examples, and its unit is volts (V). $\Delta V$ in Tables 1 and 2 is the value obtained by substituting voltages $V_1$ and $V_2$ into the equation $(V_1 - V_2)/V_1 \times 100$, and its unit is %. S in Tables 1 and 2 is the value obtained by substituting temperatures $T_1$ and $T_0$ and time $S_1$ into the equation $(T_1 - T_2)/S_1$, and its unit is °C/sec.

[Table 1]

| | Example | | | | | | |
|---|---|---|---|---|---|---|---|
| | 1 | 2 | 3 | 4 | 5 | 6 | 7 |
| $T_2$ | 92 | 92 | 92 | 92 | 92 | 92 | 92 |
| $T_1$ | 64 | 57 | 65 | 58 | 65 | 71 | 70 |
| $T_0$ | 23.2 | 23.2 | 23.2 | 23.2 | 23.2 | 23.2 | 23.2 |
| $S_1$ | 0.77 | 0.8 | 0.76 | 0.78 | 0.76 | 0.71 | 0.72 |
| $\Delta T$ | 30 | 38 | 29 | 37 | 29 | 23 | 24 |
| $V_1$ | 4.4 | 4.4 | 4.4 | 4.4 | 4.4 | 4.4 | 4.4 |
| $V_2$ | 2.1 | 1.1 | 1.8 | 1.2 | 1.5 | 1.5 | 1.48 |
| $\Delta V$ | 52.3 | 75.0 | 59.1 | 72.7 | 65.9 | 56.9 | 66.4 |
| S | 53 | 42.3 | 55 | 44.6 | 55 | 67.3 | 65.0 |

[Table 2]

| | Comparative Example | | |
|---|---|---|---|
| | 1 | 2 | 3 |
| $T_2$ | 92 | 92 | 92 |
| $T_1$ | 92 | 90 | 88 |
| T0 | 23.3 | 23.2 | 23.2 |
| $S_1$ | 0.45 | 0.48 | 0.52 |
| $\Delta T$ | 0 | 2 | 4 |
| $V_1$ | 4.4 | 4.4 | 4.4 |
| $V_2$ | 0.4 | 0.43 | 0.52 |
| $\Delta V$ | 91 | 90.2 | 88.2 |
| S | 152.9 | 139.2 | 124.6 |

From Tables 1 and 2, it can be known that in the case where the electrode current collector disclosed in this specification is applied, even if a short-circuit phenomenon occurs, the temperature increase is effectively suppressed by blocking abnormal charge migration.

On the other hand, in Comparative Example 1, where the current collector without forming any polymer layer is applied, it can be known that a severe voltage drop occurs and the temperature rapidly rises due to an abnormal rapid migration of charges upon short-circuit occurrence.

## Claims

**1.** A current collector, comprising:

a current collector body; and
a polymer layer on the current collector body, wherein the polymer layer comprises a conductive polymer, and a $\Delta T$ of Equation 1 below is 15% or more:

[Equation 1]

$$\Delta T = (T_2 - T_1) / T_2 \times 100$$

wherein, the $T_1$ is a maximum temperature in a needle test for a fully charged mono-cell comprising the current collector, and the $T_2$ is the maximum temperature in a needle test for a reference mono-cell.

**2.** The current collector according to claim 1, wherein the $T_1$ of Equation 1 is 90°C or less.

**3.** The current collector according to claim 1, wherein a S of Equation 2 below is 70 or less:

[Equation 2]

$$S = (T_1 - T_0)/S_1$$

wherein, the $T_1$ is the same as the $T_1$ in Equation 1, the $T_0$ is temperature at the time point when a minimum voltage is confirmed in the needle test for the fully charged mono-cell comprising the current collector, and the $S_1$ is a time required from the time point when the temperature $T_0$ is confirmed to the time point when the temperature $T_1$ is confirmed.

**4.** The current collector according to claim 3, wherein the $S_1$ of Equation 2 is 0.5 seconds or more.

**5.** The current collector according to claim 1, wherein a $\Delta V$ of Equation 3 below is 80% or less:

[Equation 3]

$$\Delta V = (V_1 - V_2)/V_1 \times 100$$

wherein, the $V_2$ is a minimum voltage in the needle test for the fully charged mono-cell comprising the current collector, and the $V_1$ is voltage of the fully charged mono-cell before the needle test.

**6.** The current collector according to claim 1, wherein the conductive polymer comprises a unit having a long-chain hydrocarbon functional group.

**7.** The current collector according to claim 6, wherein the conductive polymer comprises a unit having a first hydrocarbon functional group with 10 or more carbon atoms and a unit having a second hydrocarbon functional group with 9 or less carbon atoms.

**8.** The current collector according to claim 7, wherein a ratio of the sum of mole numbers of the unit having the first hydrocarbon functional group and the unit having the second hydrocarbon functional group relative to mole numbers of all units comprised in the conductive polymer is 70 mol% or more.

**9.** The current collector according to claim 8, wherein a ratio M2/M1 of a mole number M2 of the unit having the second hydrocarbon functional group to a mole number M1 of the unit having the first hydrocarbon functional group is from 0.01 to 100.

**10.** The current collector according to claim 6, wherein the conductive polymer further comprises a unit having a polar functional group.

**11.** The current collector according to claim 10, the polar functional group is carboxyl group, hydroxy group, amino group, cyano group, nitro group, ether group, or functional group of Formula 5 below:

[Formula 5]

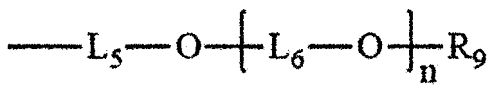

wherein, the $L_5$ is a single bond, an alkylene group, or an alkylidene group, the $L_6$ is an alkylene group or an alkylidene group, the $R_9$ is hydrogen or an alkyl group, and the n is a number in a range of 1 to 10.

**12.** The current collector according to claim 1, wherein the polymer layer further comprises a conductive material.

**13.** The current collector according to claim 12, wherein the conductive material is surface-treated with a polyphenol-based compound.

**14.** The current collector according to claim 12, wherein an amount of the conductive polymer in the polymer layer is in a range of 30 to 95 weight%, and the conductive material is comprised in an amount of 5 to 195 parts by weight relative to 100 parts by weight of the conductive polymer.

**15.** The current collector according to claim 12, wherein a D of Equation 4 below is in a range of 40 to 400 weight%/μm:

[Equation 4]

$$D = W/T$$

wherein, the W is the amount of the conductive material in the polymer layer, and the T is the thickness of the polymer layer.

**16.** The current collector according to claim 1, wherein the polymer layer has a thickness in a range of 100 to 2,000 nm.

**17.** An electrode, comprising:

the current collector of claim 1; and
an electrode active material layer formed on the polymer layer of the current collector.

**18.** An electrode assembly, comprising the electrode of claim 17.

**19.** A secondary battery, comprising the electrode of claim 17.

**20.** A secondary battery, comprising the electrode assembly of claim 18.

[Figure 1]

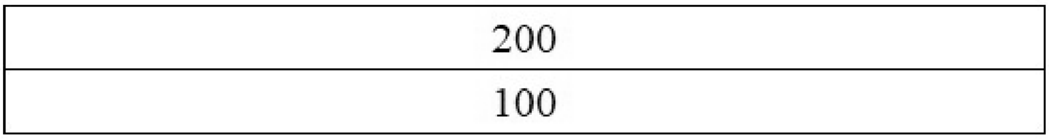


[Figure 2]

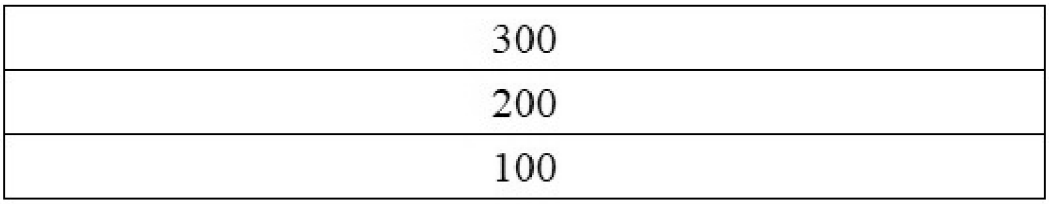


[Figure 3]

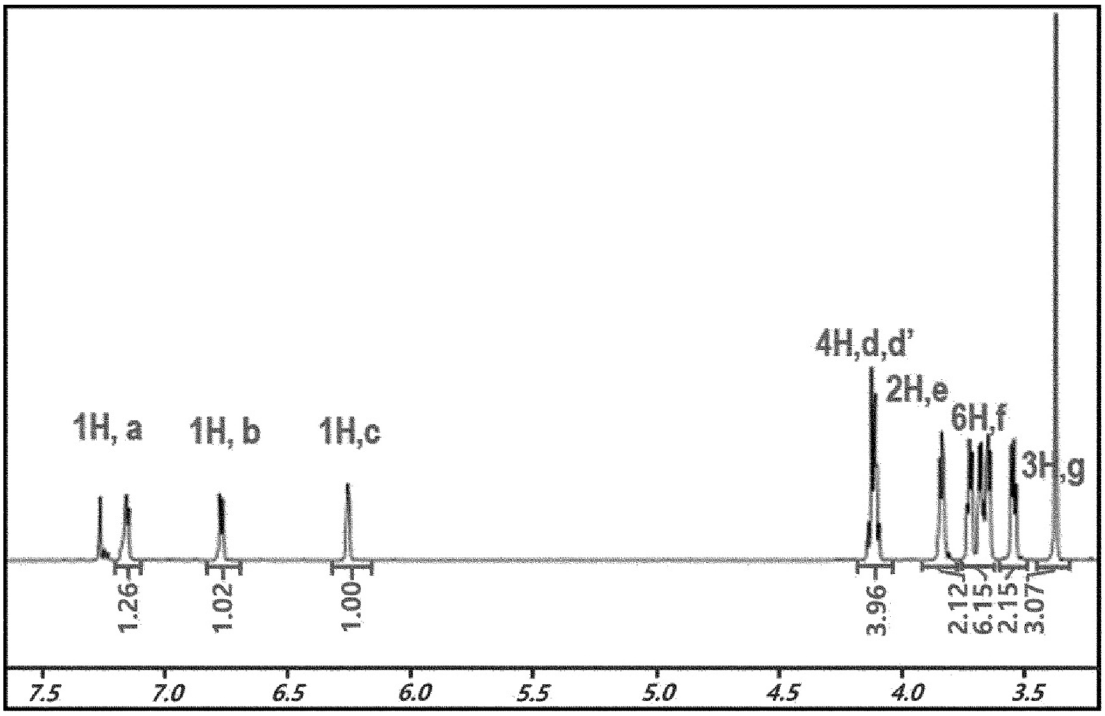

[Figure 4]

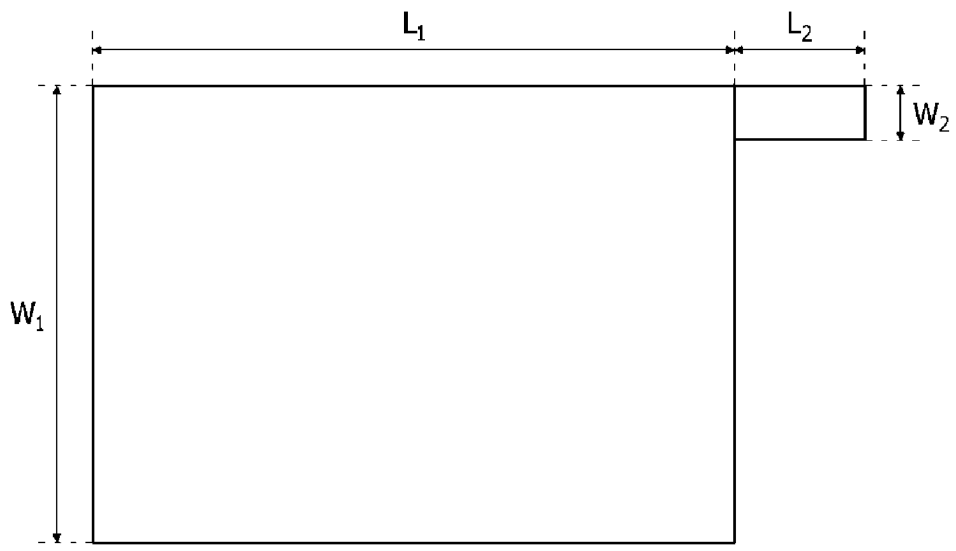


[Figure 5]

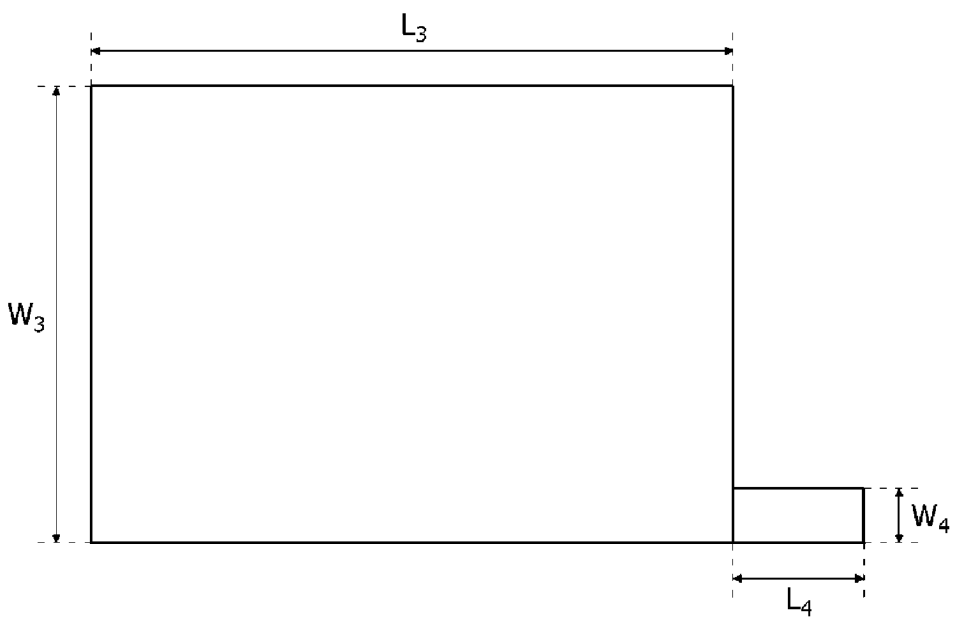

[Figure 6]

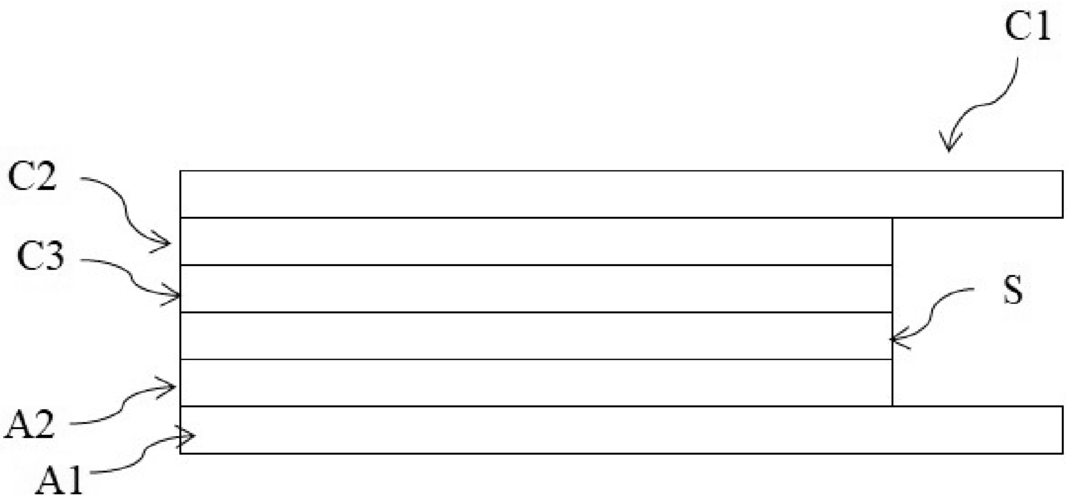

[Figure 7]

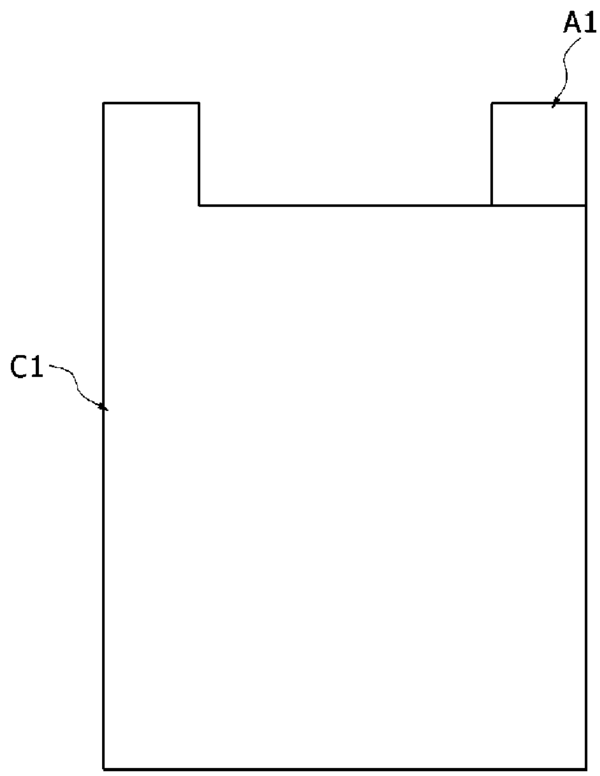

[Figure 8]

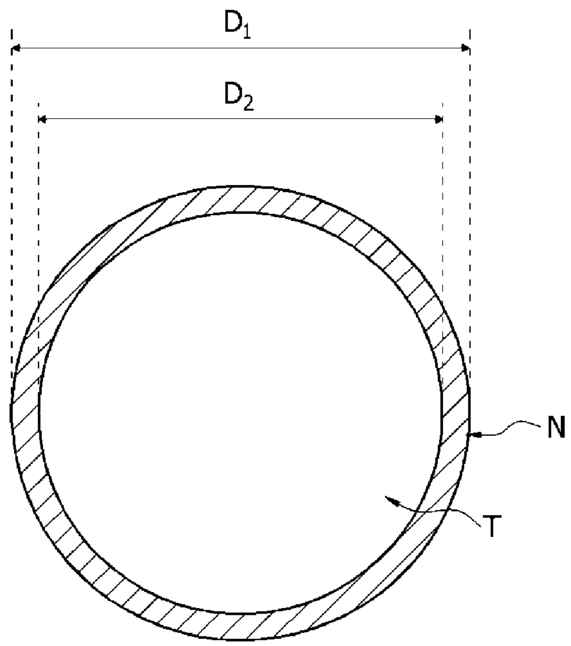

[Figure 9]

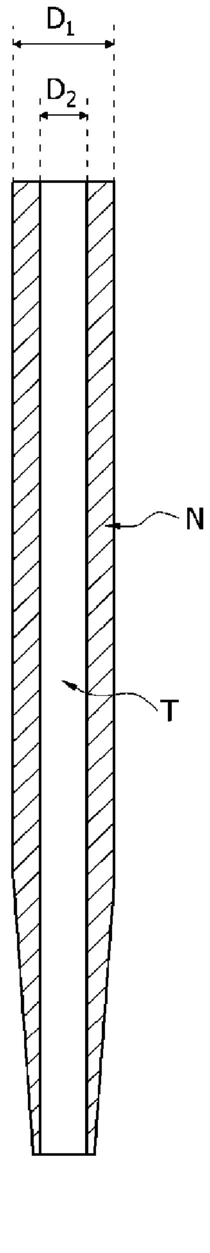

[Figure 10]

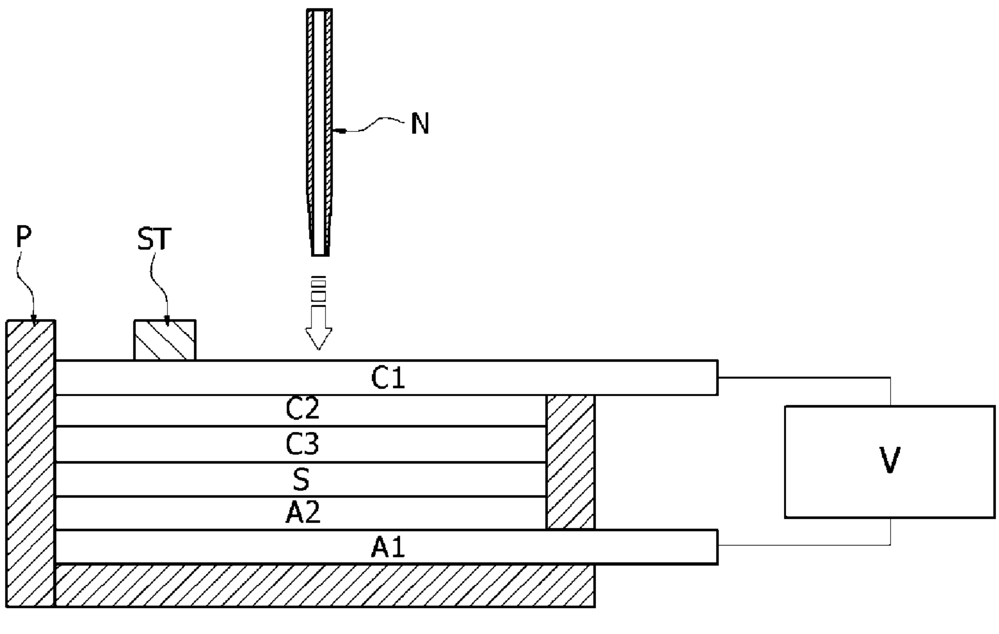

**INTERNATIONAL SEARCH REPORT**

International application No. **PCT/KR2024/014716**

**A. CLASSIFICATION OF SUBJECT MATTER**

**H01M 4/66**(2006.01)i; **H01M 4/62**(2006.01)i; **H01M 4/13**(2010.01)i; **H01M 10/052**(2010.01)i; **C08G 61/12**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/66(2006.01); H01M 10/05(2010.01); H01M 4/02(2006.01); H01M 4/13(2010.01); H01M 4/1315(2010.01); H01M 4/36(2006.01); H01M 4/62(2006.01); H01M 4/80(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집전체(current collector), 고분자층(polymer layer), 전도성 고분자(conductive polymer), 니들 테스트(needle test), 폴리티오펜(polythiophene)

**C. DOCUMENTS CONSIDERED TO BE RELEVANT**

| Category* | Citation of document, with indication, where appropriate, of the relevant passages | Relevant to claim No. |
|---|---|---|
| A | JP 2007-066633 A (SONY CORP.) 15 March 2007 (2007-03-15)<br>See claims 3 and 7; and paragraph [0027]. | 1-20 |
| A | JP 2016-519399 A (JENAX INC.) 30 June 2016 (2016-06-30)<br>See claims 1 and 5. | 1-20 |
| A | US 2019-0140280 A1 (CONTEMPORARY AMPEREX TECHNOLOGY CO., LIMITED) 09 May 2019 (2019-05-09)<br>See claims 1-18. | 1-20 |
| A | US 2020-0161639 A1 (CONTEMPORARY AMPEREX TECHNOLOGY CO., LIMITED) 21 May 2020 (2020-05-21)<br>See claims 1-14. | 1-20 |
| A | KR 10-2014-0143660 A (JENAX INC.) 17 December 2014 (2014-12-17)<br>See claims 1-29. | 1-20 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/014716**

| Patent document cited in search report | Publication date (day/month/year) | Patent family member(s) | Publication date (day/month/year) |
|---|---|---|---|
| JP 2007-066633 A | 15 March 2007 | None | |
| JP 2016-519399 A | 30 June 2016 | CN 105340114 A | 17 February 2016 |
| | | CN 105340114 B | 02 August 2019 |
| | | EP 2975681 A1 | 20 January 2016 |
| | | EP 2975681 B1 | 06 June 2018 |
| | | JP 6188914 B2 | 30 August 2017 |
| | | KR 10-1516225 B1 | 04 May 2015 |
| | | KR 10-2014-0131115 A | 12 November 2014 |
| | | US 2016-0049662 A1 | 18 February 2016 |
| | | US 9935316 B2 | 03 April 2018 |
| | | WO 2014-178646 A1 | 06 November 2014 |
| US 2019-0140280 A1 | 09 May 2019 | CN 109755468 A | 14 May 2019 |
| | | CN 109755468 B | 12 January 2021 |
| | | EP 3483907 A1 | 15 May 2019 |
| | | EP 3483907 B1 | 09 September 2020 |
| | | US 11189833 B2 | 30 November 2021 |
| US 2020-0161639 A1 | 21 May 2020 | CN 111200160 A | 26 May 2020 |
| | | CN 111200160 B | 27 April 2021 |
| | | EP 3654418 A1 | 20 May 2020 |
| | | EP 3654418 B1 | 20 July 2022 |
| | | US 11329280 B2 | 10 May 2022 |
| | | WO 2020-098784 A1 | 22 May 2020 |
| KR 10-2014-0143660 A | 17 December 2014 | CN 105378980 A | 02 March 2016 |
| | | CN 105378980 B | 24 August 2018 |
| | | EP 2975675 A1 | 20 January 2016 |
| | | EP 2975675 B1 | 20 February 2019 |
| | | JP 2016-519841 A | 07 July 2016 |
| | | JP 2018-032635 A | 01 March 2018 |
| | | JP 6246318 B2 | 13 December 2017 |
| | | JP 6625593 B2 | 25 December 2019 |
| | | KR 10-1582376 B1 | 04 January 2016 |
| | | US 10396364 B2 | 27 August 2019 |
| | | US 2016-0111729 A1 | 21 April 2016 |
| | | WO 2014-196843 A1 | 11 December 2014 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230131049
- KR 1020230131050

### Non-patent literature cited in the description

- *CHEMICAL ABSTRACTS*, 62-31-7